# EUROPÄISCHE PATENTANMELDUNG

(11) **EP 4 184 259 A1**
(43) Veröffentlichungstag der Anmeldung: **24.05.2023**
(21) Anmeldenummer: 22204988.4
(22) Anmeldetag: 02.11.2022
(51) Int. Cl.: G05B 17/00, G05B 19/418

(54) **VORRICHTUNG UND VERFAHREN ZUR VERARBEITUNG EINES DIGITALEN ZWILLINGS EINER WERKZEUGMASCHINE IN EINER MEHRBENUTZERUMGEBUNG**

(30) Priorität: 23.11.2021 DE 102021130676
(71) Anmelder: DMG MORI Digital GmbH, 87459 Pfronten (DE)
(72) Erfinder: NIEDERWESTBERG, Daniel, 49326 Melle (DE)
(74) Vertreter: MERH-IP Matias Erny Reichl Hoffmann Patentanwälte PartG mbB

(57) **Zusammenfassung**

Zur rechnereffizienten Verarbeitung eines digitalen Zwillings einer Werkzeugmaschine wird ein computerimplementiertes Verfahren zur Verarbeitung eines digitalen Zwillings der Werkzeugmaschine in einer Mehrbenutzerumgebung vorgeschlagen. Es wird eine, mit mehreren Clients C verbindbare, zentrale Verarbeitungsplattform welche eine cloudbasierte Serviceplattform 1 vorgeschlagen, welche eine Frontend-Schicht FS und eine Backend-Schicht BS aufweist. Das Verfahren umfasst die Schritte, in der Backend-Schicht BS, Erstellen eines digitalen Zwillings einer ausgewählten Werkzeugmaschine nach Empfang einer Initialanweisung eines ersten Clients C über die Frontend-Schicht FS. Die Initialanweisung umfasst dabei die Konfigurationsinformation der ausgewählten Werkzeugmaschine. Der digitale Zwilling wird basierend auf der Konfigurationsinformation erstellt. Nachfolgend findet ein Übertragen von Ausgabedaten des erstellten digitalen Zwillings an einen oder mehrere Clients C über die Frontend-Schicht FS statt.

## Beschreibung

Die vorliegende Erfindung betrifft eine Vorrichtung und ein Verfahren zum speicher- und prozessoptimierten Verarbeiten eines digitalen Zwillings einer Werkzeugmaschine und der zugehörigen Simulationsumgebung in einer Mehrbenutzerumgebung mit einer Vielzahl von Client Terminals.

Ein gattungsgemäßer digitaler Zwilling einer Werkzeugmaschine ist ein digitales Abbild der Werkzeugmaschine oder des gesamten Werkzeugmaschinensystems in einer Computerumgebung. Solche digitalen Zwillinge können beispielsweise das physikalische Verhalten der realen Werkzeugmaschine oder deren Komponenten nachbilden, um so beispielsweise die Produktionseffizienz zu maximieren oder um das Systemverständnis zu verbessern und entsprechend zu optimieren. Beispielsweise in der WO 2012/168427 A1 ist eine Maschinensimulation eines Arbeitsprozesses an einer Werkzeugmaschine unter Verwendung einer virtuellen Maschine gezeigt, in welcher Teilprozesse aufgeteilt werden und entsprechend berechnet werden können.

In der EP 1 901 149 B1 ist eine Maschinensimulation zur Festlegung eines Ablaufs für die Bearbeitung eines Werkstücks an einer Werkzeugmaschine gezeigt, wobei insbesondere eine Datenstruktur in die Simulation integriert wurde, die es ermöglicht durch Sensoren an realen Werkzeugmaschinen aufgenommene Daten zu integrieren und so die Steuerungsbeschreibung des virtuellen Maschinenmodells zu verbessern.

Bekannte Systeme, welche einen digitalen Zwilling einer Werkzeugmaschine und deren Umgebung bereitstellen, haben den Nachteil, dass diese regelmäßig nicht für eine effiziente Verwendung in Mehrbenutzerumgebungen geeignet sind. Zudem erfordert das Verarbeiten und Bereitstellen eines solchen digitalen Zwillings einer Werkzeugmaschine äußerst hohe Rechen- und Speicherkapazitäten.

Im technischen Gebiet der Werkzeugmaschinen sind dabei besondere Randbedingungen zu beachten, da sowohl die Anzahl und der Speicherbedarf der vorhandenen Messdaten enorm zugenommen hat und auch die Komplexität und die erforderliche Präzision der Werkzeugmaschinen stets neue Dimensionen erreichen, so dass teilweise massiver Speicherbedarf und massive Rechenkapazität nötig sind, um dem geforderten Standard zu entsprechen. Unter diesen Ausgangsbedingungen ist es eine besondere Herausforderung, ein solches System in einer Mehrbenutzerumgebung zu implementieren, und dabei den Randbedingungen im Bereich der Werkzeugmaschinen auch gerecht zu werden.

Eine Aufgabe der vorliegenden Erfindung ist darin zu sehen, die Probleme der bestehenden Systeme zu lösen und insbesondere ein optimiertes Verfahren zur Verarbeitung eines digitalen Zwillings einer Werkzeugmaschine in einer Mehrbenutzerumgebung und eine entsprechende Vorrichtung bereitzustellen.

Zur Lösung der Probleme werden die Merkmale der unabhängigen Ansprüche vorgestellt. Vorteilhafte Weiterbildungen finden sich in den abhängigen Ansprüchen.

Im Anwendungsfall von Werkzeugmaschinen bestehen virtuelle Maschinen üblicherweise aus steuerseitigen und systemseitigen Komponenten, wobei zu den steuerungsseitigen Komponenten die Mensch-Maschine-Schnittstelle HMI (Human Machine Interface) in Form von Steuerbedienpult und Bildschirm, der numerische Steuerungskern, d. h. die Steuerungsanweisungen, die durch ein NC-Programm vorgegeben werden, und die speicherprogrammierbare Steuerung (SPS) bzw. die programmierbare Logiksteuerung (Programmable Logic Control), d. h. die maschinenspezifische Steuerung, die in der Regel maschinengeregelte Kreise, einschließlich Zusatzaggregate wie beispielsweise Werkzeugwechsler, Kühlwasserzufuhr etc. steuert, sowie entsprechende Antriebsregler zählen, während als systemseitige Komponenten insbesondere Antriebssysteme inklusive deren kinematischem und kinetischem Verhalten (Nachgiebigkeit, Thermik) und zugehörige Regelbaugruppen, Pneumatik/Fluidsysteme, Arzt- und Spindelkinematik inklusive deren geometrischer Repräsentation, Spannmittel sowie Werkzeuge, Werkstücke und hiermit durchgeführte Abtragsprozesse zu nennen sind.

Ein wesentliches Ziel im Rahmen der Simulation lag bislang darin, die Bearbeitungs/Bewegungsabläufe eines realen Prozesses auf der Simulationsplattform in den gleichen Schritten in Echtzeit wie bei dem realen Anwendungsfall zu durchlaufen. Hieraus ließen sich wertvolle Informationen bezüglich der tatsächlich zu erwartenden Bearbeitungsabläufe, etwa bei Inbetriebnahme einer neuen Werkzeugmaschine oder beim Einrichten der Werkzeugmaschine gewinnen. Die Ablaufgeschwindigkeit der Simulation kann dabei zum Zwecke einer genaueren Betrachtung verlangsamt oder je nach Leistungsfähigkeit der Simulationsplattform auch beschleunigt werden.

Ein moderner digitaler Zwilling einer Werkzeugmaschine sowie dessen Simulationsumgebung kann massiven Speicherbedarf aufweisen, da mittlerweile eine Vielzahl von Berechnungsdaten und Messdaten vorliegt, welche ein äußerst präzises virtuelles Abbild der Werkzeugmaschine erlaubt. Diese äußerst aufwendigen virtuellen Modelle erfordern konsequenterweise auch enorme Rechenleistung, um eine entsprechende Simulation und/oder eine Darstellung überhaupt erst zu ermöglichen. Erst aufgrund der hohen Komplexität und hohen Datenmenge dieser virtuellen Modelle ist es jedoch möglich, sehr präzise Ergebnisse der Simulation zu erreichen und mithin nahezu sämtliche Merkmale eines Lebenszyklus einer Werkzeugmaschine entsprechend zu simulieren und optimieren. Da moderne Werkzeugmaschinensysteme üblicherweise mit einer Vielzahl von Systemen und Nutzern interagieren müssen, ergibt sich das Erfordernis, dass das hochkomplexe virtuelle Modell und die äußerst aufwendige Simulation in einer Mehrbenutzerumgebung verfügbar sein müssen. Daher wird ein ressourcenoptimiertes computerimplementiertes Verfahren vorgeschlagen, mit welchem die Verarbeitung eines digitalen Zwillings einer Werkzeugmaschine und/oder eines kompletten Werkzeugmaschinensystems mit entsprechender Simulationsumgebung in einer Mehrbenutzerumgebung unter Verwendung einer zentralen Verarbeitungsplattform ermöglicht wird. Die erfindungsgemäße zentrale Verarbeitungsplattform weist als zentrales Element eine cloudbasierte Serviceplattform auf sowie bevorzugt eine effiziente Unterteilung in zumindest eine Frontend-Schicht und zumindest eine Backend-Schicht, wobei der digitale Zwilling der Werkzeugmaschine und/oder Werkzeugmaschinenumgebung in der Backend-Schicht angeordnet ist. Bereits durch diese grundlegende Struktur und die Zuordnung des digitalen Zwillings sowie die Anordnung einer vordefinierten Schnittstelle in der Frontend-Schicht ist eine bessere Ressourcennutzung in einer Mehrbenutzerumgebung erreichbar. Beispielsweise kann daher vorteilhaft parallel an Frontend- und Backend-Komponenten Befehlsverarbeitung stattfinden und es können klar definierte und selektiv ansteuerbare Schnittstellen zwischen Frontend-Schicht und Backend-Schicht vorgesehen werden. Basierend auf der spezifischen Konfiguration des erstellten digitalen Zwillings mit der effizienten Datenverarbeitung, ist zudem eine Visualisierung in Echtzeit auf den Client-Terminals möglich. Zudem werden Interaktionsmöglichkeiten unterstützt, wie bspw. die freie Bewegung im 3D-Raum des virtualisierten 3D-Modells. Besonders bevorzugt werden automatisiert grafische Interaktionsmetaphern erstellt und an die verbundenen Clients übermittelt. Dadurch kann eine optimierte Mensch-Maschine-Interaktion erreicht werden, also eine optimierte Schnittstelle zwischen Benutzern und beispielsweise einer Werkzeugmaschine.

Vorteilhaft kann das Verfahren die Schritte umfassen, dass in der Backend-Schicht ein digitaler Zwilling erstellt werden kann und zwar ein digitaler Zwilling einer ausgewählten Werkzeugmaschine nach Empfang einer Initialanweisung eines Clients. Anders als bei bekannten Systemen wird daher vorgeschlagen, den digitalen Zwilling der Werkzeugmaschine oder eines gesamten Werkzeugmaschinensystems erst nach Empfang einer Initialanweisung eines ersten Clients zu erstellen, und zwar in der Backend-Schicht. Die Werkzeugmaschine ist dabei bevorzugt eine ausgewählte Werkzeugmaschine oder eine individualisierte Werkzeugmaschine, so dass bereits mit der Initialanweisung eine vom ersten Client erforderte individuelle Werkzeugmaschine in der Backend-Schicht erstellt werden kann. Mithin ist vor empfang der Initialanweisung die individuelle Werkzeugmaschine noch nicht als virtuelles Modell vorliegend.

Die Initialanweisungwird vorteilhaft über die Frontend-Schicht empfangen und über die vorbestimmten Datenkanäle über einen Zentralbus an die Backend-Schicht weitergeleitet. In einer vorteilhaften Weiterbildung kann eine Initialanweisung direkt aus einem Service in der Backend-Schicht getriggert werden, um das Erstellen des digitalen Zwillings der ausgewählten Werkzeugmaschine zu initiieren. Bevorzugt wird daher der digitale Zwilling erst bei Bedarf erzeugt und bereits bei der Erzeugung derart, dass der Datensatz der Initialanweisung in die Erstellung (direkt) mit einfließt. Der Datensatz der Initialanweisung kann dazu vorteilhaft zumindest Konfigurationsinformationen der ausgewählten Werkzeugmaschine umfassen und der digitale Zwilling wird zumindest basierend auf dieser Konfigurationsinformation erstellt. Die Initialanweisung umfasst bevorzugt funktionelle Daten insbesondere einen Trigger d. h. die Initialanweisung beeinflusst die Steuerung des Betriebs der Plattform, die die Daten verarbeitet. Vorteilhaft hat daher die Initialanweisung eine Doppelfunktion, nämlich das Triggern der Erstellung des digitalen Zwillings der ausgewählten Werkzeugmaschine oder des Werkzeugmaschinensystems und gleichzeitig das Bereitstellen eines Datensatzes, welcher spezifische Konfigurationsinformationen der ausgewählten Werkzeugmaschine und/oder des Werkzeugmaschinensystems vorgibt. In Kombination mit der Serviceplattform, welche die Frontend-Schicht und die Backend-Schicht aufweist sowie der Verwendung der charakteristischen Initialanweisung zur Erstellung des digitalen Zwillings (erst auf Anordnung) wird bereits ein effizienter Mechanismus zur Erzeugung des datentechnisch aufwendigen digitalen Zwillings einer ausgewählten Werkzeugmaschine ermöglicht. Sowohl die Speichernutzung als auch die Nutzung der erforderlichen Rechenkapazitäten können daher vorteilhaft reduziert werden.

Zudem wird ein Informationsaustausch zwischen dem ersten (primären) Client, der die Initialanweisung ausgibt, minimiert, so dass insbesondere die zumeist begrenzte Bandbreite in einer Mehrbenutzerumgebung optimal genutzt werden kann. Das Verfahren kann zudem vorteilhaft den Schritt umfassen, dass Ausgabedaten des erstellten digitalen Zwillings an einen oder mehrere Clients über die Frontend-Schicht übertragen werden. In effizienter Weise ist es daher möglich, die Ausgabedaten gleichzeitig über einen vorbestimmbaren Ausgabeweg über die Frontend-Schicht an mehrere Clients gleichzeitig zu übermitteln. Vorteilhaft weisen die Clients gleiche oder unterschiedliche Client-Terminals auf, über welche der Zugriff an der Frontend-Schicht ermöglicht wird. Mithin ermöglich die Frontend-Schicht eine gleichzeitige Kommunikation mit unterschiedlichen Client-Terminals gleichzeitig und auch bidirektional zum Übertragen insbesondere der Ausgabedaten des erstellen digitalen Zwillings der Backend-Schicht. Als Beispiel können die übertragenen Ausgabedaten insbesondere zum Visualisieren des erstellten digitalen Zwillings auf zumindest einem Client-Terminal genutzt werden (bevorzugt auf mehreren Client-Terminals unter Verwendung der gleichen Ausgabedaten zur synchronen Darstellung/Bearbeitung).

Vorteilhaft können daher die Ausgabedaten in der Frontend-Schicht angepasst und/oder konvertiert werden, um die effiziente Übertragung zu ermöglichen, wobei besonders vorteilhaft die Client-Terminals unabhängig voneinander eine Übertragung der Ausgabedaten anfordern können. Beispielsweise kann ein in der Frontend-Schicht vorgesehenes Client-Managementmodul abhängig vom Identifizierungswert des Clients Übertragungsanfragen der Client-Terminals bestätigen, verweigern oder sogar priorisieren, wobei dies besonders vorteilhaft unabhängig vom erstellten digitalen Zwilling in der Backend-Schicht durchgeführt werden kann, so dass vorteilhaft eine speichertechnische und rechnerprozesstechnische Trennung vorliegen kann.

Vorteilhaft kann das Verfahren zusätzlich den Schritt umfassen, dass ein oder mehrere Simulationsparameter auf den erstellten digitalen Zwilling (insbesondere auf ein Slave-Modell) angewendet werden können. Vorteilhaft wird dies in der Backend-Schicht durchgeführt, wobei die Simulationsparameter bevorzugt bereits zumindestteilweise in der Initialanweisungvorliegen und/oder zusätzlich von einem Simulationsmodul in der Backend-Schicht vorgegeben werden.

Vorteilhaft ist der erstellte digitale Zwilling ein virtuelles Modell, das zumindest physikalische Eigenschaften der realen Werkzeugmaschine entsprechend der ausgewählten Werkzeugmaschine und bevorzugt der Betriebsmittel, des Bearbeitungsprozesses und/oder des Automatisierungssystems simuliert. Besonders vorteilhaft kann das Automatisierungssystem auch einen AGV umfassen, also ein automatisiertes Transportsystem zur Bestückung der Werkzeugmaschine mit Werkzeug oder Werkstücken. Vorteilhaft ist daher der digitale Zwilling ein virtuelles Abbild einer reellen Werkzeugmaschine (oder real existierender Werkzeugmaschinenkomponenten) oder eines reellen Werkzeugmaschinensystems, wobei sich das virtuelle Modell in einer vorteilhaften Weiterbildung aus verschiedenen real vorliegenden Komponenten und deren Steuerdaten und Messdaten bedienen kann, obwohl bspw. die reelle Werkzeugmaschine als solche noch nicht zusammengebaut ist. Mit anderen Worten, in einer besonders vorteilhaften Weiterbildung kann der erstellte digitale Zwilling ein virtuelles Modell einer ausgewählten Werkzeugmaschine sein, welche auf verschiedene reale Werkzeugmaschinenkomponenten und reale Systemkomponenten sowie deren Daten Zugriff erhält, um ein virtuelles Modell einer solchen in Teilen vorliegenden realen Werkzeugmaschine zu simulieren. Vorteilhaft werden physikalische Eigenschaften der Werkzeugmaschine simuliert, wobei dies auch das Verhalten der Werkzeugmaschine an sich sowie Bearbeitungsprozesse und Bearbeitungsschritte von Werkstücken mittels der Werkzeugmaschine umfasst sowie besonders bevorzugt vollständige Herstellungsprozesse mittels der Werkzeugmaschine inklusive des Verhaltens der Prozessmittel und Steuerungs- und Regelungssysteme.

Der der erstellte digitale Zwilling kann ein Automatisierungssystem mit einer Transporteinrichtung (insbesondere ein AGV, automated guided vehicle) umfassen, die ein auf einer Grundfläche frei verfahrbares Transportfahrzeug und eine an dem Transportfahrzeug vorgesehene Handhabungseinrichtung umfasst, einen von der Handhabungseinrichtung aufnehmbaren Transportgutträger, der zumindest ein erstes Ausrichtelement aufweist, und eine Aufnahmevorrichtung zur Aufnahme des Transportgutträgers, die auf der Grundfläche aufstellbar oder an einer auf der Grundfläche aufgestellten Maschine anordenbar ist, wobei die Handhabungseinrichtung dazu eingerichtet ist, den Transportgutträger derart zu halten, dass bei einem Ein- und/oder Auswechselvorgang des Transportgutträgers an der Aufnahmevorrichtung durch die Handhabungseinrichtung der Transportgutträger relativ gegenüber der Handhabungseinrichtung beweglich gehalten ist, und die Aufnahmevorrichtung zumindest ein zweites Ausrichtelement aufweist, das bei dem Ein- und/oder Auswechselvorgang des Transportgutträgers für ein Zusammenwirken mit dem zumindest einen ersten Ausrichtelement des Transportgutträgers zur Ausrichtung des Transportgutträgers gegenüber der Aufnahmevorrichtung eingerichtet ist.

Vorteilhaft bewirken der eine oder die mehreren Simulationsparameter, dass das virtuelle Modell eine Ausgabe erzeugt, die das Verhalten der ausgewählten Werkzeugmaschine und/oder des ausgewählten Werkzeugmaschinensystems als Reaktion auf den einen oder die mehreren Simulationsparameter simuliert. Mithin kann durch die Simulationsparameter das reelle Verhalten der Werkzeugmaschine und/oder des Werkzeugmaschinensystems möglichst realitätsgetreu und bevorzugt in Echtzeit simuliert werden. Vorteilhaft können Simulationsparameter mittels Eingabedatensatz eines Clients an die cloudbasierte Serviceplattform (über die Frontend-Schicht) eingegeben werden, dort zwischengespeichert werden und anschließend auf den digitalen Zwilling angewendet werden.

Besonders vorteilhaft ist die ausgewählte Werkzeugmaschine eine clientseitig individualisierte Werkzeugmaschine. Dies bedeutet, dass bereits über einen Client eine Auswahl, also eine Konfiguration der Werkzeugmaschine, insbesondere der Werkzeugmaschinenkomponenten wie Anzahl und Anordnung der Spindeln, Anzahl und Anordnung der Werkzeugmagazine sowie weitere Werkzeugmaschinendetails individualisiert werden können. Werkzeugmaschinen betreffen hier insbesondere numerisch gesteuerte Werkzeugmaschinen, wie Fräsmaschinen, Drehmaschinen, Schleifmaschinen, Fräs-/Drehmaschinen und Bearbeitungszentren, die dazu eingerichtet sind, an Einspannmitteln der Werkzeugmaschine eingespannte Werkstücke mit einem Werkzeug oder mehreren Werkzeugen zu bearbeiten.

Zudem und besonders vorteilhaft, können eine oder mehrere spezifische Anwendungsfälle, insbesondere durch den Datensatz der Initialanweisung, vorgegeben werden, so dass die spezifischen Anwendungsfälle und die Konfigurationsinformation die eigentliche Konfiguration des erstellten digitalen Zwillings und die Simulationsbedingungen festlegen. Anwendungsfälle umfassen insbesondere Bearbeitungszyklen, Bearbeitungsprozesse, Serviceprozesse, Werkzeugmaschinenbewegungen sowie Wartungs-, Service- und Modernisierungsvorgänge. Der Datensatz der Initialanweisung, welche vorteilhaft die zuvor genannten Informationen umfasst, ermöglicht daher bereits im ersten Schritt, nämlich vor Erstellung des individuellen digitalen Zwillings, eine spezifische Konkretisierung einerseits der Konfiguration des Werkzeugmaschinensystems bzw. der Werkzeugmaschine wie auch eine Konkretisierung der Simulationsbedingungen und des Anwendungsfalls. Mithin kann durch Verwendung der charakteristischen Initialanweisung eine spezielle Werkzeugmaschine cloudbasiert kreiert werden, um einen spezifischen Anwendungsfall möglichst realitätsgetreu zu simulieren, beispielsweise die Herstellung eines Fräsbauteils. Durch diese Ausgestaltung ist es einerseits möglich, die auszutauschenden Daten auf das Wesentliche zu reduzieren, und andererseits werden Prozessor-Last-verteilung und die Speicherzuweisung verbessert. Dadurch, dass der erstellte digitale Zwilling cloudbasiert in der Backend-Schicht der Serviceplattform bereitgestellt wird, wird dennoch ein Höchstmaß an Präzision der Ausgabedaten erreicht.

Weitere Anwendungsfälle, welche vorgegeben werden können, sind beispielsweise der Servicefall. Ist die Wartung eines spezifischen Bauteils einer reellen Werkzeugmaschine nötig, so kann auf effiziente Weise ein digitaler Zwilling dieser individuellen Werkzeugmaschine erstellt werden, der fokussiert ist auf den spezifischen Anwendungsfall, so dass es möglich ist, diesen in der Mehrbenutzerumgebung bereitzustellen, um beispielsweise einen Wartungs- oder Servicevorgang zu simulieren und dies mit einer Vielzahl von Clients zu teilen und zu analysieren, um letztlich den reellen Wartungsvorgang an der reellen Werkzeugmaschine effizient und sicher durchführen zu können. Besonders vorteilhaft kann daher ein Client-Terminal über eine Virtual Reality-Vorrichtung verfügen, um eine Visualisierung des Wartungsvorgangs an der reellen Werkzeugmaschine mittels der hochpräzisen Daten (Ausgabedaten) des erzeugten digitalen Zwillings darzustellen und den Wartungsvorgang entsprechend zu begleiten. Der Vorgang kann gleichzeitig über weitere Clients, bevorzugt in Echtzeit, über die Verbindung mit der Frontend-Schicht verfolgt und/oder angepasst werden.

Vorteilhaft kann das Verfahren zusätzlich beim Schritt Erstellen des digitalen Zwillings folgende Vorgänge umfassen, nämlich basierend auf der empfangenen Initialanweisung, Auswahl von Objektkomponenten des zu erstellenden digitalen Zwillings, besonders bevorzugt aus einer zentralen Datenbank. Vorzugsweise ist die zentrale Datenbank in der Backend-Schicht angeordnet, so dass eine direkte Kommunikation mit dem zu erstellenden digitalen Zwilling und einem entsprechenden Prozessor (insb. Mehrkernprozessor) möglich ist. Die Auswahl der Objektkomponenten erfolgt bevorzugt auf Basis der Initialanweisung und beinhaltet Komponenten wie Maschinenbettachsschlitten, Spindelbetriebsmittel, Werkzeugzufuhreinrichtungen, Werkzeugwechseleinrichtungen, Werkzeugmagazin und sämtliche Komponenten einer Werkzeugmaschine und/oder eines Werkzeugmaschinensystems.

Durch die hohe Detailgenauigkeit des zu erstellenden digitalen Zwillings ist zudem auch die Auswahl und Simulation von verschiedenen Werkzeugen, Werkzeugaufnahmen und Maschinensteuerungen möglich. Für die Auswahl von Objektkomponenten basierend auf der empfangenen Initialanweisung kann zusätzlich bevorzugt eine Zuordnung von real gemessenen Echtzeitdaten einer realen Werkzeugmaschine und/oder einer realen Werkzeugmaschinenkomponente durchgeführt werden. Weiter bevorzugt kann zusätzlich oder alternativ eine Zuordnung einer technologischen Hierarchie der ausgewählten Objektkomponenten durchgeführt werden, um Abhängigkeitsverhältnisse der Objektkomponenten untereinander bereits von vornherein mit minimalem Konfliktrisiko zu gewährleisten. Weiter vorteilhaft kann die Initialanweisung beispielsweise eine Maschinennummernspezifikation der Maschine sowie einen erforderlichen oder spezifischen Anwendungsfall umfassen. Die Objektkomponenten umfassen daher insbesondere virtuelle Werkzeugmaschinenkomponenten, Modellierungsbedingungen und Simulationsbedingungen.

Der Schritt des Erstellens des digitalen Zwillings kann zusätzlich eine automatische Reduktion der ausgewählten Objektkomponenten umfassen. Vorteilhaft werden die Objektkomponenten daher automatisch zu reduzierten Objektkomponenten gemäß einem vorgegebenen Vereinfachungsgrad umgewandelt. Der Vereinfachungsgrad kann vorgegeben sein oder besonders bevorzugt kann der Vereinfachungsgrad automatisch aus der Konfigurationsinformation und/oder dem spezifischen Anwendungsfall (cloudseitig) ermittelt werden. Daher kann ein Vereinfachungsgrad automatisch bestimmt werden, besonders bevorzugt basierend auf dem Datensatz der Initialanweisung. Diese spezielle Ausgestaltung unter Verwendung der automatischen Reduktion ermöglicht es, ausgewählte Objektkomponenten, welche beispielsweise aus einer Masterdatenbank (oder zentralen Datenbank) in der Backend-Schicht ausgewählt werden und welche hochkomplexe und umfangreiche Datensätze umfassen, auf spezielle Konfigurationsgestaltungen sowie nur bestimmte Anwendungsfälle zuzuschneiden und mithin zu reduzieren. Dies geschieht besonders vorteilhaft automatisch beim Erstellen des digitalen Zwillings, bevorzugt in einem Pipelineprozess zur parallelen Abarbeitung der Reduktionsschritte integriert in einem vorbestimmten Modul in der Backend-Schicht. Somit kann auf äußerst effiziente Weise eine integrierte Datenreduktion durchgeführt werden, welche direkt für die Erstellung des digitalen Zwillings der ausgewählten Werkzeugmaschine eingegeben wird.

Besonders vorteilhaft kann die automatische Reduktion der ausgewählten Objektkomponenten mittels Vereinfachungsgrad, welcher vorteilhaft basierend auf der empfangenen Initialanweisung ausgewählt werden kann bzw. automatisch ausgewählt wird, mehrere Schichten der Objektkomponenten reduzieren. Diese Schichten umfassen vorteilhaft die automatische Reduktion der Detailgenauigkeiten der Geometriedaten des Modells sowie eine Reduktion der Knoten des Polygonnetzes bei der Gitternetzerzeugung in einer weiteren Schicht. Mithin kann die automatische Reduktion die Detailgenauigkeit der Geometriedaten des Modells reduzieren, so dass beispielsweise abhängig vom Vereinfachungsgrad sowie dem Anwendungsfall nicht sichtbare (oder auch für den Anwendungsfall nicht benötigte) Merkmale und/oder Merkmale, welche eine Mindestgröße unterschreiten, aus dem Datensatz der ausgewählten Objektkomponente entfernt werden. In einem weiteren Schritt kann die bereits reduzierte ausgewählte Objektkomponente durch eine grobmaschigere Gitternetzerzeugung bei der Benetzung weiter vereinfacht werden, beispielsweise mit einem Polygonnetz. Diese Schritte können für die ausgewählte Objektkomponente abschnittsweise parallel zueinander durchgeführt werden, besonders bevorzugt in einem Pipelineprozess, so dass eine spezifische Objektkomponente bezogen auf die Initialanweisung automatisch und höchst effizient erstellt werden kann. Auch durch die spezielle Reihenfolge der Reduktionsschritte kann eine weitere Schonung der Computerressourcen erreicht werden.

Der Schritt des Erstellens des digitalen Zwillings kann zudem eine automatische Erstellung eines Master-Modells des zu erstellenden digitalen Zwillings umfassen, bevorzugt durch Kombination der automatisch reduzierten Objektkomponenten gemäß vordefinierter Kombinationsregeln. Über die vorgegebenen Kombinationsregeln gibt das Master-Modell daher eine Struktur vor, über welche die reduzierten Objektkomponenten verknüpft werden können, wobei das Master-Modell zusätzlich den Status und die Anbindungsstelle der reduzierten Objektkomponenten steuert, derart, dass über Anpassungsbefehle selektiv reduzierte Objektkomponenten auch nach Erstellung des zu erstellenden digitalen Zwillings erweitert werden können, um daher nachträglich (nach erstmaliger Erstellung des Master-Modells) in der Backend-Schicht beispielsweise weitere Anwendungsfälle und/oder sogar zusätzliche Objektkomponenten zu berücksichtigen, beispielsweise auch aufgrund der Eingabe von anderen Clients (insbesondere Anwendungsfallanfragen eines Clients und/oder Slave-Modell-Erzeugungsanfragen eines Clients). Dies ist insbesondere in Mehrbenutzerumgebungen besonders vorteilhaft, da über spezielle Kommunikationskanäle, bevorzugt über die Frontend-Schicht, Primäranweisungen das Master-Modell nach vorhergehender Zulässigkeitsprüfung erweitern können, so dass dies nach Änderung sämtlichen Client-Terminals bereitgestellt werden kann und diese daher Zugriff auf das Ergebnis der Anpassung und mithin den angepassten erstellten digitalen Zwilling erhalten können.

Eine stabile und prozessoroptimale Steuerung des Systems wird erreicht, wenn das Master-Modell des erstellten digitalen Zwillings für alle Clients unsichtbar in der Backend-Schicht vorliegt und zusätzlich für die Interaktion mit Clients eigene Slave-Modelle (Datentechnisch reduzierte und abhängige Modelle des Master-Modells) vom Master-Modell abgeleitet werden, so dass bevorzugt für ausgewählte Clients lediglich eine indirekte Kommunikation mit dem Master-Modell möglich ist, nämlich nur über die vorgeschalteten Slave-Modelle. Vorteilhaft kann das Master-Modell sämtliche Informationen und Details aller Anfragen (insbesondere Anwendungsfallanfragen eines Clients und/oder Slave-Modell-Erzeugungsanfragen eines Clients) und Slave-Modell-Befehle (bspw. datentechnisch wie Initialanweisung nur ohne Erstelltrigger) der Clients umfassen, wobei bevorzugt das Master-Modell für die einzelnen Clients nicht sichtbar ist, d.h. ein direkter Zugriff auf die Ausgabedaten ist bspw. nicht möglich. Slave-Modelle können von diesem Master-Modell abgeleitet werden, können sichtbar für die einzelnen Clients sein und sind besonders bevorzugt weiter reduziert, so dass nur die für den jeweiligen Client angeforderten Informationen und Details, je nach dessen Anwendungsfall, Konfigurationsinformation und deren Berechtigung, übermittelt werden können.

Vorteilhaft kann die Anwendung einer Änderungsanfrage (Datensatz mit Befehlseingabe zur Anpassung des virtuellen Modells) eines Clients direkt an einem Slave-Modell erfolgen, und bevorzugt sofort wirksam sein. Anschließend kann die Anwendung der Änderungsanfrage am Master-Modell erfolgen, insbesondere nach Prüfung und/oder Zulassung der Änderungsanfrage durch eine integrierte Änderungs-Prüfungseinheit. Beispielsweise kann die Auswirkung der Änderung auf das Slave-Modell herangezogen werden um zu entscheiden ob die Änderung zulässig ist. Das Master-Modell wird somit vor unzulässigen Änderungen geschützt. Sollte die Prüfung der Änderungsanfrage oder die Zulassung am Master-Modell nicht erfolgreich sein, wird eine Rückgängigmachung der Änderung am Slave-Modell bewirkt und bevorzugt eine entsprechende Fehlermeldung ausgegeben. Durch die Änderungsanfrage können vorteilhaft die Simulationsbedingungen, Simulationsparameter und/oder das virtuelle Modell der Werkzeugmaschine oder eines Teils davon verändert werden.

Besonders bevorzugt kann die Initialanweisung zusätzlich einen oder mehrere spezifische Anwendungsfälle der ausgewählten Werkzeugmaschine umfassen. Anwendungsfälle sind daher beispielsweise ein konkreter Bearbeitungsvorgang, ein konkreter Servicevorgang, ein konkreter Wartungsvorgang, ein vorgegebener Bewegungsablauf einer Werkzeugmaschinenkomponente, eine Darstellung bestimmter Werkzeugmaschinenkomponenten und/oder deren Interaktion oder gar ein kompletter Herstellungsprozess eines Werkstücks unter Verwendung verschiedener Prozessschritte mittels der ausgewählten Werkzeugmaschine. Die spezifischen Anwendungsfälle der ausgewählten Werkzeugmaschine können daher zum Festlegen bestimmter Simulationsbedingungen verwendet werden, welche auf den erstellten digitalen Zwilling angewendet werden, um die Ressourcenanforderung der Simulation des digitalen Zwillings zu reduzieren, wobei, wie oben beschrieben, dies bereits initial, und somit vor Erstellung des digitalen Zwillings vorgegeben werden kann um somit den optimalen digitalen Zwilling für die Initialanweisung bereitzustellen. Somit kann die Initialanweisung zusätzlich einen oder mehrere spezifische Anwendungsfälle der ausgewählten Werkzeugmaschine umfassen, zum Festlegen vorbestimmter Simulationsbedingungen welche auf den erstellten digitalen Zwilling angewendet werden um die Ressourcenanforderung der Simulation des digitalen Zwillings zu reduzieren.

Besonders bevorzugt kann der erstellte digitale Zwilling ein virtuelles Master-Modell der ausgewählten Werkzeugmaschine sein und beispielsweise einem Client als Besitzer oder Primär-Client zugewiesen werden. Zusätzlich kann beispielsweise besonders vorteilhaft der Schritt vorgesehen sein, dass das Master-Modell angepasst werden kann in der Backend-Schicht, bevorzugt erst nach Empfang von Anpassungsbefehlen, welche bevorzugt durch die Clients über die Frontend-Schicht übermittelt werden können. Die zentrale Verarbeitungsplattform weist bevorzugt eine Kooperationseinheit auf zum Koordinieren der Aktivitäten der Clients und insbesondere der eingegebenen Anpassungsbefehle sowie der Ausgaben an die Clients. Bevorzugt weist das Master-Modell eindeutig identifizierbare Kennungen der vorliegenden reduzierten Objektkomponenten auf, welche durch entsprechende Anpassungsbefehle der Clients adressiert werden können, vorteilhaft verknüpft mit einem Anpassungsbefehl, der ähnlich zur Initialanweisung Komponenteninformationen und/oder einen spezifischen Anwendungsfall umfassen kann. Durch dieses direkte Ansprechen der jeweiligen Objektkomponenten kann ein effizientes Anpassen des Master-Modells direkt in der Backend-Schicht erreicht werden, wobei nach Anpassung einer oder mehrerer Objektkomponenten des Master-Modells dieses vorteilhaft wiederum der oben genannten automatischen Reduktion unterliegt, unter Berücksichtigung der ursprünglichen Initialanweisung und sämtlicher neuer und zulässiger Anpassungsbefehle, so dass eine Erweiterung des Master-Modells ausgehend von einer Initialanweisung eines Primär-Clients unter Berücksichtigung sämtlicher zulässiger Anpassungsbefehle der Sekundär-Clients, bevorzugt objektkomponentenspezifisch, erreicht wird. Als Resultat kann ein äußerst effizientes Master-Modell in einer Mehrbenutzerumgebung bereitgestellt werden, welches sämtliche Anwendungsfälle der verbundenen Clients bzw. Client-Terminals abdeckt, bei gleichzeitiger Erreichung einer optimalen Speicherausnutzung und reduzierten Berechnungsdauer, beispielsweise bei der Simulation unter Verwendung dieses Modells. Vorteilhaft kann das angepasste Master-Modell als Slave-Modell abgeleitet werden und separat gespeichert werden unter Zuweisung eines eindeutig identifizierbaren Markers, über die einen oder die mehreren verbundenen Client-Terminals eindeutig auf dieses Slave-Modell zugreifen können.

Bevorzugt kann eine Simulation, beispielsweise eines Anwendungsfalles, der von einem Client vorgegeben wird, basierend auf dem Slave-Modell durchgeführt werden. Vorteilhaft werden die Slave-Modelle auch in der Backend-Schicht erstellt und/oder gespeichert. Besonders bevorzugt kann ein separater Speicher für das Master-Modell und die Slave-Modelle verwendet werden. Die einzelnen Slave-Modelle können einem oder mehreren verbundene Clients eindeutig zugewiesen werden, wobei durch Vorsehen der eindeutig identifizierbaren Kennung auch eine Weitergabe eines Slave-Modells bzw. einer Bereitstellung eines Zugriffs auf das Slave-Modell für andere Client-Terminals außer dem bereits zugewiesenen Client-Terminal ermöglicht wird. Wird daher über einen beispielsweise Sekundär-Client ein Slave-Modell in der Backend-Schicht vom Master-Modell abgeleitet, so wird dieses Modell dem anfordernden Sekundär-Client zugewiesen, jedoch kann dieses auch Zugriff weiterer Clients auf dieses erstellte Slave-Modell ermöglichen, so dass in der Mehrbenutzerumgebung eine Vielzahl von Clients auf das erstellte Slave-Modell Zugriff erhalten können und bevorzugt die identischen Ausgabedaten erhalten können. Bevorzugt wird das erstellte Slave-Modell vom Master-Modell abgeleitet, so dass das Slave-Modell lediglich auf bevorzugt einen spezifischen Anwendungsfall reduziert ist und daher im Vergleich zum Master-Modell eine weitere deutlich geringere Speicher- und Rechenanforderung an das System stellt. Dies ermöglicht eine gezielte Simulation basierend auf dem Slave-Modell, welche beispielsweise von einem Sekundär-Client angefordert wird, und kann daher gleichzeitig mehreren weiteren Sekundär-Client-Terminals und/oder dem Primär-Client-Terminal bereitgestellt werden. Besonders bevorzugt ist das Primär-Client-Terminal das Client-Terminal, über das die Anweisung für das Master-Modell versendet wurde und somit der Besitzer des Master-Modells.

Weiter vorteilhaft ist der Primär-Client mit den Sekundär-Clients gleichgestellt. Vorteilhaft werden die Slave-Modelle in einem oder mehreren separaten Speichern vom Master-Modell abgespeichert, wobei insbesondere unterschiedliche Speichersysteme für die Slave-Modelle und das Master-Modell verwendet werden können, beispielsweise um für die Slave-Modelle Speicher mit schnellem Zugriff bereitzustellen und für das Master-Modell einen Speicher mit einer zeitlich längeren Datensicherheit.

Vorteilhaft ist der Schritt vorgesehen, Koordinieren des Zugriffs der Client-Terminals auf das Master-Modell durch Echtzeitrückmeldung an verbundene Client-Terminals. Vorteilhaft kann auch eine Sperrung von Änderungen am Master-Modell vorgenommen werden zur Vermeidung von Konflikten. Daher kann das Verfahren die kombinierten Schritte aufweisen, Koordinieren des Zugriffs der Clients auf das Master-Modell durch Echtzeit-Rückmeldung an verbundene Clients und Sperrung von Änderungen am Master-Modell zur Vermeidung von Konflikten. Somit wird in der Mehrbenutzerumgebung eine Änderung des Master-Modells durch die verbundenen Clients und/oder Client-Terminals ermöglicht. Besonders vorteilhaft erlaubt das Master-Modell zum Erstellen bzw. zum Ableiten von Slave-Modellen, basierend auf bereits integrierten Anwendungsfällen, den gleichzeitigen, also parallelen, Zugriff auf mehrere Client-Terminals, um daher vorteilhaft gleichzeitig mehrere Slave-Modelle erstellen zu können und den jeweiligen Clients bereitzustellen. Dies wird dadurch erreicht, dass das Master-Modell bereits die angefragten Anwendungsfälle umfasst und daher eine Änderung des Master-Modells an sich nicht nötig wird, sondern lediglich die Ableitung zu dem angeforderten Slave-Modell. Über das jeweilige Slave-Modell kann die Simulation des/der angeforderten Anwendungsfalls/Anwendungsfälle, simuliert werden und an die Clients zurückgegeben werden. Insbesondere die Echtzeitrückmeldung kann vorteilhaft durch eine direkte Kommunikation zwischen Master-Modell, über die Frontend-Schicht, mit den Client-Terminals erreicht werden. Weiter vorteilhaft kann die zentrale Verarbeitungsplattform den parallelen Zugriff mehrerer Clients auf den erstellten digitalen Zwilling abhängig von den zugeordneten Clientkategorien koordinieren.

Besonders vorteilhaft kann eine Änderung des Master-Modells in der Mehrbenutzerumgebung die Schritte umfassen, dass ein Client und/oder Client-Terminal über die Frontend-Schicht eine Änderungsanfrage zur Anpassung des Master-Modells an die Koordinationseinheit stellt, wobei vorteilhaft die Koordinationseinheit weitere Schritte ausführt. Vorteilhaft erfolgen Änderungen stets zuerst am Slave-Modell und werden dort sofort wirksam und von dort aus erst an das Master-Modell weitergeleitet. Nach Prüfung durch eine Prüfeinheit wird im Konfliktfall die Änderung des Master-Modells abgewiesen und am Slave-Modell wieder rückgängig gemacht. Dies kann entsprechend an den Client ausgegeben werden. Über das Slave-Modell ist es daher möglich, eine Filterung der Änderungsanfragen am Master-Modell zu erreichen, um die Effizienz und Datensicherheit des Master-Modells zu gewährleisten. Zur Verarbeitung einer Änderungsanfrage zur Anpassung des Master-Modells führt die Koordinationseinheit insbesondere den Schritt aus, Prüfen, ob die Änderungsanfrage zulässig ist, zumindest durch Bestimmung, ob die Änderungsanfrage von anderen Clients blockiert wird, und/oder ob der anfragende Client oder das anfragende Client-Terminal die nötige Berechtigung umfasst. Vorteilhaft, wenn die Änderungsanfrage zulässig ist, führt die Koordinationseinheit ein Blockieren des Zugriffs der Clients durch, insbesondere durch Versenden einer Blockieranweisung an alle verbundenen Clients bzw. an alle Clients. Vorteilhaft wird im nachfolgenden Schritt ein Anwenden der Änderungsanfrage direkt auf das Slave-Modell durchgeführt, wobei die Änderung dort sofort wirksam wird und von dort aus an das Master-Modell weitergeleitet wird. Nach Prüfung auf Konflikte wird die Änderung im Master-Modell entweder implementiert, oder abgewiesen und bei Abweisung am Slave-Modell wieder rückgängig gemacht. Da die Slave-Modelle stets nur eine Ableitung des Master-Modells sind, lassen sich Konflikte und Widersprüche von Änderungsanfragen bevorzugt nur am Master-Modell, mit hoher Wahrscheinlichkeit herausfinden, so dass das Master-Modell letztlich erst eine Änderung final zulässt oder wieder abweist und entsprechend das Slave-Modell anpasst oder die Änderung rückgängig macht. Nach dem Anwenden der Änderungsanfrage kann bevorzugt ein Versenden einer Blockieraufhebungsanweisung an alle verbundenen Clients und/oder alle Clients erfolgen und/oder eine Ausgabe des geänderten Slave-Modells oder der Daten des geänderten Slave-Modells. Die Änderung des Master-Modells in der Mehrbenutzerumgebung kann durch eine Echtzeitrückmeldung an die verbundenen Clients unterstützt werden.

Bevorzugt wird ein Master-Modell des erstellten digitalen Zwillings erstellt, unter Verwendung aller übermittelten Konfigurationsinformationen und Anwendungsfälle aller Clients der ausgewählten Werkzeugmaschine. Bevorzugt ist, dass das Master-Modell und oder die Ausgaben für die Clients nicht (direkt) sichtbar sind und die Ausgabe an die Clients nur mittels vom Master-Modell abgeleiteten Slave-Modellen erzeugt wird. Bevorzugt ist zudem zumindest jeweils ein Slave-Modell einem Client zugewiesen und jedes Slave-Modell auf zumindest einen vorbestimmten Anwendungsfall reduziert.

Bevorzugt werden die Änderungen somit zuerst an einem Slave-Modell angewendet und von dort aus an das Master-Modell weitergeleitet und im Zweifelsfall wird dann bei der Abweisung des Master-Modells am Slave-Modell wieder die Änderung rückgängig gemacht. Die Anwendung der Änderungsanfrage kann bevorzugt zuerst an einem Slave-Modell erfolgen, insbesondere direkt, und anschließend am Master-Modell, insbesondere nach Prüfung und/oder Zulassung der Änderung. Besonders bevorzugt erfolgt dies in Echtzeit und ermöglicht eine optimierte Ressourcennutzung und verbesserte Bedienbarkeit. Die Änderung kann einerseits geprüft werden unter beispielsweise Bezugnahme auf die Auswirkungen der Änderung auf das Slave-Modell und/oder nach Zulassungsprüfung der Änderungsanfrage selbst, beispielsweise ob unerlaubte Anweisungen oder Befehle enthalten sind. Erst anschließend wird das Master-Modell entsprechend angepasst bzw. wird bei Feststellung nach Prüfung der Änderung, dass die Änderung zu Konflikten oder Fehlern führt bzw. wenn bereits die Zulassung der Änderungsanfrage für das Master-Modell als unerlaubt festgestellt wird, die Änderungsanfrage am Master-Modell abgewiesen. Daraufhin kann besonders bevorzugt die Änderung am Slave-Modell rückgängig gemacht werden und dem anfragenden Client ein entsprechendes Feedback gegeben werden. Durch diese stufenweise Vorgehensweise für Änderungen kann sichergestellt werden, dass am Master-Modell keine fehlerhaften Änderungen der Clients eingeführt werden und zudem kann eine Auswirkung der Änderung direkt und effizient am Slave-Modell erkannt werden, was beispielsweise schneller und effizienter ist, als eine Änderung des Master-Modells mit anschließender Prüfung, insbesondere wenn das Master-Modell ein Vielfaches der Speicher- und Rechenkapazität des Slave-Modells benötigt. In einer Weiterbildung kann ein Konflikt auch extern durch einen Client behoben werden um beispielsweise ein manuelles Zusammenführen (mergen) der Modelle zu ermöglichen.

Da zudem das Master-Modell mit sämtlichen Slave-Modellen bevorzugt direkt in Verbindung steht und diese beeinflusst, kann zudem ausgeschlossen werden, dass durch Anpassung über einen Client-Terminal sämtliche Slave-Modelle beschädigt werden, da das Master-Modell erst nach der vorgegebenen Änderungs- und Prüfungsreihenfolge angepasst werden kann. Dieser Aspekt ist insbesondere in einer Mehrbenutzerumgebung relevant zur Sicherstellung der Effizienz und Datensicherheit bei der Verarbeitung des individuellen digitalen Zwillings.

Durch die Änderungsanfrage kann insbesondere auch ein Simulationsparameter und/oder eine Simulationsbedingung und/oder das virtuelle Modell der individuellen Werkzeugmaschine selbst oder eines Teils davon angepasst werden.

Besonders vorteilhaft kann die zentrale Verarbeitungsplattform den parallelen Zugriff mehrerer Clients auf den erstellten digitalen Zwilling zulassen. Vorteilhaft wird dies durch Koordinierung der Clients, abhängig von zugeordneten ClientKategorien und/oder der vorliegenden Zugriffszeit erreicht. In einer vorteilhaften Weiterbildung kann zudem eine Priorisierung der Clients vorgenommen werden.

Das Master-Modell des erstellten digitalen Zwillings kann bevorzugt einem primären Client als Besitzer zugeordnet sein. Wenn ein weiterer Client über die Frontend-Schicht eine Kooperationsanfrage an die Kooperationseinheit stellt, um Zugriff auf den erstellten digitalen Zwilling zu erhalten, kann die Kooperationseinheit für den Zugriff auf den erstellten digitalen Zwilling ein Slave-Modell des erstellten digitalen Zwillings bereitstellen. Der weitere Client kann beispielsweise auch als Sekundär-Client bezeichnet werden. Über die Kooperationsanfrage kann der sekundäre Client beispielsweise Zugriff auf ein bereits erstelltes Slave-Modell erreichen, so dass insbesondere gleichzeitig mehrere Clients auf dasselbe Slave-Modell Zugriff haben bzw. von demselben Slave-Modell die Ausgaben erhalten. Bevorzugt kann ein bereits vorhandener Client auch eine Kooperationsanfrage an einen noch nicht vorhandenen Client schicken bzw. vorbereiten.

Da es die Möglichkeit gibt, aus der Vielzahl von möglicherweise vorliegenden Slave-Modellen eine unterschiedliche Anzahl von Anwendungsfällen abzugeben, kann über die Kooperationsanfrage festgestellt werden, ob der Client Zugriff zum angefragten Slave-Modell erhalten soll oder nicht. Durch diese Möglichkeit wird serverseitig (cloudseitig) ein Ausschließen bestimmter Clients ohne entsprechende Berechtigung vom Zugriff auf vorbestimmte Slave-Modelle ermöglicht. Der Primär-Client ist zwar als Besitzer des Master-Modells definiert, jedoch bekommt vorteilhaft auch der Primär-Client lediglich ein eigenes Slave-Modell bereitgestellt bzw. dessen Ausgabe. Insbesondere in der Mehrbenutzerumgebung wird durch die Zuordnung separater Slave-Modelle zu den anfragenden Clients eine Unabhängigkeit des Master-Modells sichergestellt. Besonders vorteilhaft ist jedes der Slave-Modelle ebenfalls in der Backend-Schicht angeordnet. Es kann vorausgewählt werden, ob je nach Typ des Clients oder Client-Terminals das zugeordnete Slave-Modell nur auf der Client-Seite dargestellt werden soll, oder auch physisch auf die Client-Seite gedoppelt sein soll, also gespiegelt, um die Möglichkeit eines aktiven Client-Systems (AR, VR, Tablet, etc.) bereitzustellen. Mithin kann die Verarbeitungsplattform vorteilhaft bereits durch Auswahl in der Frontend-Schicht entscheiden, ob die eindeutig identifizierten Client-Terminals entsprechende Marker umfassen, welche es erlauben, zusätzlich zu einer Darstellung des Slave-Modells auch eine physische Verdopplung, also eine physische Kopie, auf Client-Seite des Slave-Modells zu erhalten. Nach Beendigung des Clients wird bevorzugt das Slave-Modell gelöscht, wobei besonders bevorzugt Ergebnisse aus der Simulation des Slave-Modells auch nach dem Löschen weiterhin in einer Datenbank verfügbar sind. Es kann vorteilhaft vorgesehen sein, dass das Slave-Modell nach Beendigung des Clients, der als Besitzer zugeordnet wurde, gelöscht wird und dabei das Master-Modell unverändert bleibt.

Besonders vorteilhaft ist das bereitgestellte Slave-Modell ein auf einen spezifischen Anwendungsfall reduziertes Modell des erstellten digitalen Zwillings der ausgewählten Werkzeugmaschine oder eines Teils davon. Beispielsweise kann ein Client einen digitalen Zwilling einer vollständigen Werkzeugmaschine erzeugen, als Master-Modell. Ein weiterer Client, beispielsweise ein Sekundär-Client oder ein Client mit beschränkten Befugnissen, soll lediglich den Bereich des Werkzeugmagazins sehr detailliert empfangen können. Dieser begrenzte Bereich kann ihm detailliert zur Verfügung gestellt werden, wobei der Rest der Werkzeugmaschine nicht oder nur sehr stark vereinfacht bereitgestellt wird. Der Primär-Client kann den Detailbereich auswählen, den der Sekundär-Client als Detailbereich zur Verfügung gestellt bekommt. Beispielsweise kann der Primär-Client eine Simulation basierend auf dem Slave-Modell triggern, beispielsweise einen Werkzeugwechsel. Dieser wird in der Backend-Schicht anhand des Slave-Modells durchgeführt, wobei lediglich die Ergebnisse für alle Clients übermittelt werden und sichtbar sind. Mithin kann in einer besonders vorteilhaften Weiterbildung der Primär-Client Berechtigungen für Sekundär-Clients vergeben, um dadurch den Zugriff der Sekundär-Clients auf Untergruppen des Master-Modells zu beschränken. In einer weiteren Ausbildung kann der Primär-Client für einen oder mehrere Sekundär-Clients ein eigenes Slave-Modell erstellen und dabei den entsprechenden Vereinfachungsgrad sowie einen begrenzten Ausgabebereich der Simulationsdaten vorgeben. Vorteilhaft kann über eindeutige Identifizierungswerte das Slave-Modell einem bestimmten Sekundär-Client zugewiesen werden, beispielsweise durch den Primär-Client. Speicheroptimiert kann das Slave-Modell nach Beendigung des Clients, der als Besitzer zugeordnet wurde, automatisch gelöscht werden und dabei das Master-Modell unverändert bleiben.

Das Master-Modell kann in der Backend-Schicht bereitgestellt werden und sämtliche von Clients übermittelten Anwendungsfälle für die gewählte Werkzeugmaschine umfassen.

Erfindungsgemäß kann eine zentrale Verarbeitungsplattform mit einer Mehrbenutzerumgebung bereitgestellt werden, wobei diese zumindest einen digitalen Zwilling einer individuellen Werkzeugmaschine umfassen kann und wobei die Verarbeitungsplattform eine cloudbasierte Serviceplattform sein kann mit einer Frontend-Schicht und einer Backend-Schicht. Die Verarbeitungsplattform kann konfiguriert sein zum Erstellen eines digitalen Zwillings in der Backend-Schicht, wobei der digitale Zwilling individuell erstellt wird bezogen auf eine frei konfigurierte Werkzeugmaschine einer ausgewählten Werkzeugmaschine. Besonders vorteilhaft erfolgt das Erstellen erst nach Empfang einer Initialanweisung eines Primär-Clients über die Frontend-Schicht. Die Initialanweisung kann zumindest die Konfigurationsinformation der ausgewählten Werkzeugmaschine und/oder einen oder mehrere Anwendungsfälle und/oder Simulationsparameter umfassen, wobei der digitale Zwilling zumindest basierend auf dieser Initialanweisung erstellt wird. Die Ausgabedaten können übertragen werden an einen oder mehrere Primär- oder Sekundär-Clients, insbesondere über die Frontend-Schicht.

Ein Client-Terminal kann zudem als Verarbeitungseinheit als Teil einer reellen Werkzeugmaschine (besonders bevorzugt die reelle Werkzeugmaschine gemäß des erzeugten digitalen Zwillings) vorgesehen sein, so dass eine reelle Werkzeugmaschine als Client Zugriff auf die virtuelle Nachbildung der Werkzeugmaschine in der Service-Plattform erhält, um so einen Datenaustausch zwischen der reellen Werkzeugmaschine und dem digitalen Zwilling dieser Werkzeugmaschine zu ermöglichen. Vorteilhaft kann die Werkzeugmaschine (direkt) über die Serviceplattform angesteuert werden. Diese besonders vorteilhafte Ausgestaltung ermöglicht auch eine Anpassung des Master-Modells durch Ausgabewerte der reellen Werkzeugmaschine direkt durch Zuweisung als Primär-Client. Weitere Sekundär-Clients können über entsprechende Slave-Modelle Anwendungsfälle simulieren und über die cloudbasierte Service-Plattform an der reellen Werkzeugmaschine anzeigen lassen, um beispielsweise eine gesteuerte Mensch-Maschine-Interaktion direkt an der Werkzeugmaschine basierend auf den hochpräzisen Daten des digitalen Zwillings des cloudbasierten digitalen Zwillings zu ermöglichen.

In einer weiteren besonders bevorzugten Ausprägung können mehrere reelle Werkzeugmaschinen, welche beispielsweise im Wesentlichen baugleich sind, als Clients über die cloudbasierte Service-Plattform auf denselben digitalen Zwilling im Master-Modell in der Backend-Schicht zugreifen und entsprechend die Ausgaben eines oder mehrerer Slave-Modelle erhalten. In einer besonders vorteilhaften weiterführenden Ausprägung einer digitalen Fabrik können eine oder mehrere reelle Werkzeugmaschinen über die Ausgabe des einen oder der mehreren Slave-Modelle der cloudbasierten Service-Plattform direkt angesteuert werden, um eine besonders effiziente Produktion und/oder eine besonders effiziente Wartung oder ein besonders effizientes Service-Feedback zu erreichen. Die Ausgabe des einen oder der mehreren Slave-Modelle kann zudem dazu verwendet werden, Systemeinstellungen der einen oder der mehreren reellen Werkzeugmaschinen anzupassen basierend auf den beispielsweise ausgegebenen Simulationsdaten. Im Gegenzug können die als Client verbundenen Werkzeugmaschinen Messsignale an die Serviceplattform zurückmelden um die Simulationsgenauigkeit zu verbessern. Somit kann vorteilhaft, vor einem reellen Produktionsvorgang, bereits über eine Simulation in der cloudbasierten Service-Plattform eine optimale Systemeinstellung der Werkzeugmaschinen berechnet werden und diese als Steuersignale über die als Clients verbundenen reellen Werkzeugmaschinen ausgegeben werden, um den Produktionsvorgang an den reellen Werkzeugmaschinen entsprechend dieser optimierten Werte durchzuführen.

Vorteilhaft kann die Frontend-Schicht zur Verbindung mit einer Vielzahl von Client-Terminals eingerichtet sein und für den clientseitigen Zugriff, beispielsweise einem Browser, die Nutzung von Browser-basiertem Rendering bereitstellen. Für Serverbasiertes Rendering kann vorteilhaft ein Graphik-fähiges Rendering bereitgestellt werden, beispielsweise auch zum Streamen von Pixeln. Vorteilhaft kann zudem ein natives Rendering in einer Cloud-verbundenen Client-Anwendung berücksichtigt werden.

Zudem wird ein Computerprogramm vorgeschlagen, umfassend Befehle die bei der Ausführung des Programms durch einen Computer diesen veranlassen, die Schritte des Verfahrens wie zuvor beschrieben auszuführen.

Vorteilhafte Ausgestaltungen und weitere Details der vorliegenden Erfindung werden im Folgenden anhand verschiedener Ausführungsbeispiele mit Bezug auf schematische Figuren beschrieben. In den schematischen Zeichnungen wird die Erfindung näher erläutert.

### Figuren

- **Fig.1a**: zeigt eine Übersichtsdarstellung einer automatischen Modellerstellung;
- **Fig. 1b**: zeigt eine weitere Darstellung eines optimierten Erstellungsprozesses, insbesondere der Erstellung eines Master-Modells;
- **Fig. 1c**: zeigt die automatische Erstellung des Modells, insbesondere des Master-Modells ausgehend von einer Initialanweisung;
- **Fig. 1d**: zeigt den Ablauf der automatischen Reduktion;
- **Fig. 2**: zeigt den Strukturaufbau der cloudbasierten Service-Plattform mit der Frontend-Schicht FS und der Backend-Schicht BS;
- **Fig. 3**: zeigt eine Darstellung der Verknüpfung zwischen Master-Modell und Slave-Modellen einer oder mehrerer Clients;
- **Fig. 4**: zeigt eine Darstellung des Anpassungsmoduls zur Anpassung beispielsweise des Master-Modells;
- **Fig. 5**: zeigt eine Kommunikationsabfolge basierend auf einer Kooperationsanfrage zweier Clients;
- **Fig. 6**: zeigt ein weiterentwickeltes Ausführungsbeispiel eines individuellen Master-Modells und abgeleiteter Slave-Modelle.

### Detaillierte Beschreibung bevorzugter Ausführungsformen

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

Für die Produktion unter Verwendung von modernen Werkzeugmaschinen werden zunehmend virtuelle Systeme verwendet, wie beispielsweise ein digitaler Zwilling, um die Effizienz und Nachhaltigkeit der Produktion zu verbessern und auch die Leistungsfähigkeit der Werkzeugmaschine optimal zu erhalten. Ein moderner digitaler Zwilling ist beispielsweise in der deutschen Anmeldung mit dem Aktenzeichen 10 2020 212 798.0 vorgeschlagen, welche hiermit vollumfänglich als Offenbarung mit aufgenommen wird. Der nächste Evolutionsschritt solcher Systeme, welche einerseits auf eine reelle Werkzeugmaschine, andererseits auf ein virtuelles System zurückgreifen, ist in der Bereitstellung solcher Systeme für eine Vielzahl von ortsunabhängigen Nutzern über eine zentrale Serverplattform zu sehen.

Im technischen Gebiet der Werkzeugmaschinen sind dabei besondere Randbedingungen zu beachten, da sowohl die Anzahl und der Speicherbedarf der vorhandenen Messdaten enorm zugenommen hat und auch die Komplexität und die erforderliche Präzision der Werkzeugmaschinen stets neue Dimensionen erreichen, so dass teilweise massiver Speicherbedarf und massive Rechenkapazität nötig sind, um dem geforderten Standard zu entsprechen. Unter diesen Ausgangsbedingungen ist es eine besondere Herausforderung, ein solches System in einer Mehrbenutzerumgebung zu implementieren, um dabei den Randbedingungen im Bereich der Werkzeugmaschinen auch gerecht zu werden.

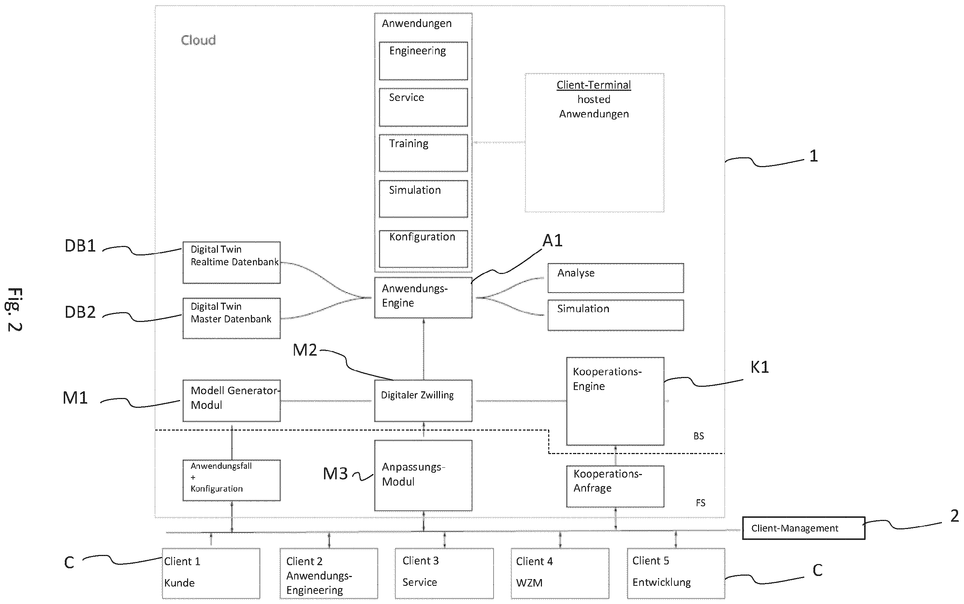

In aufwändigen Entwicklungszyklen war es den Erfindern möglich, ein System zu entwickeln, welches die geforderten Randbedingungen erfüllt und eine zuverlässige Verarbeitung eines digitalen Zwillings einer komplexen Werkzeugmaschine in einer Mehrbenutzerumgebung erlaubt. Bereits für den Vorgang der Erstellung des digitalen Zwillings wurde unter Verwendung einer spezifischen Systemkonfiguration eine charakteristische Systemstruktur und Datenübertragung vorgesehen sowie eine spezielle Verarbeitung und Weiterleitung der relevanten Daten. Eine cloudbasierte Service-Plattform 1 gemäß dieser Entwicklung ist beispielsweise in der Fig. 2 schematisch dargestellt.

Um die grundlegende Anforderung zu erfüllen, mit einer Vielzahl von Clients C, insbesondere ortsunabhängiger Clients C, kommunizieren zu können, ist ein Client-Managementmodul 2 vorgesehen, welches insbesondere über einen Kommunikationsbus zu einer im Wesentlichen beliebigen Anzahl von Clients C einen Datenaustausch ermöglicht, und zwar insbesondere zwischen den Clients C und der cloudbasierten Service-Plattform 1 als auch zwischen den Clients C untereinander. Die cloudbasierte Service-Plattform 1 ist in Fig. 2 dargestellt, wobei über Schnittstellen mit dem Client-Management 2 Eingaben der Clients C entgegengenommen und koordiniert werden können sowie Ausgaben an die Clients verteilt werden können. Clients weisen bevorzugt Client-Terminals auf, welche unterschiedlicher Art sein können, so dass das Client-Management 2 die unterschiedlichen Client-Terminals erkennen kann und diese entsprechend mit der cloudbasierten Service-Plattform 1 verbinden kann.

Client-Terminals an sich können unterschiedliche Hardware aufweisen, wobei zusätzlich auch unterschiedliche Berechtigungen der Clients vorliegen können. Beispielsweise ist in Fig. 2 Client 3 als Service-Client dargestellt. Dieser Service-Client kann beispielsweise ein Terminal eines Werkzeugmaschinenherstellers sein, welcher insbesondere eine hohe Priorität oder eine hohe Berechtigung zugewiesen bekommt, um umfassenden Zugriff auf den digitalen Zwilling M2 zu erhalten. Zudem kann beispielsweise, wie in Fig. 2 dargestellt, auch ein Kunde (Client 1) eines Werkzeugmaschinenherstellers sich als Client mit der cloudbasierten Service-Plattform verbinden und eine vorgegebene Berechtigung aufweisen. Gleichzeitig ist es besonders vorteilhaft möglich, einen eigenen Client vorzusehen, welcher das Anwendungs-Engineering umfasst, wie beispielsweise als Client 2 in Fig. 2 dargestellt. Über diesen Client können verschiedene Anwendungen und Use-Cases in die cloudbasierte Service-Plattform 1 integriert werden, um beispielsweise eine stetige Weiterentwicklung der Plattform zu ermöglichen. Ein weiterer Client kann beispielsweise eine reelle Werkzeugmaschine (WZM) gem. Client 4 in Fig. 2 sein. Diese WZM ist in einem besonderen Ausführungsbeispiel die zum digitalen Zwilling korrespondierende WZM. Dies ist jedoch nicht zwangsläufig. Beispielsweise ist der Werkzeugmaschinenbesitzer als Client 1 der Kunde des Werkzeugmaschinenherstellers. Ein Kunde dieses Werkzeugmaschinenbesitzers kann beispielsweise jemand sein, der Zugriff auf die Werkzeugmaschine hat für spezielle Produktionsprozesse. Auch dieser Client mit der WZM gem. Client 4 kann eine spezielle Berechtigung zugewiesen bekommen und somit Zugriff auf die cloudbasierte Service-Plattform 1 erhalten. Auch die Entwicklung, beispielsweise als Teil des Werkzeugmaschinenherstellers, kann über einen eigenen Client verfügen und sich über diesen mit der cloudbasierten Service-Plattform verbinden. Die Clients sind daher vielfältig und nicht auf die in Fig. 2 dargestellten Beispiele beschränkt.

Über das Client-Management 2 können eine Vielzahl von unterschiedlichen Clients, welche einerseits eine unterschiedliche Hardware im Sinne der Client-Terminals aufweisen und zusätzlich auch unterschiedliche Berechtigungen zugewiesen hat, vorgesehen sein, wobei die Anzahl der Clients im Wesentlichen beliebig erweiterbar ist, wobei werkzeugmaschinenherstellerseitig beispielsweise die Berechtigungen der Clients vorgegeben werden können.

In einer besonders vorteilhaften Weiterentwicklung ist die reelle Werkzeugmaschine (ausgewühlte WZM) auch als Client (Client 4) mit der cloudbasierten Service-Plattform verbunden und kann von dieser Daten empfangen, welche beispielsweise als Einstellungs- oder Steuerungssignale weiterverarbeitet werden und Sensorsignale und Messsignale an diesen zurückgeben. Die vorgeschlagene Struktur bietet daher grundsätzlich die Möglichkeit einer fortschrittlichen Produktion mittels Werkzeugmaschinen, welche über Fernzugriff angesteuert werden, beispielsweise unter Verwendung optimierter Prozessparameter mittels Simulation eines digitalen Zwillings der ausgewählten Werkzeugmaschine in der cloudbasierten Service-Plattform 1. In einer besonders vorteilhaften Weiterbildung sind eine Vielzahl von Werkzeugmaschinen als Client-Terminals mit der cloudbasierten Service-Plattform 1 verbunden und werden von dieser, beispielsweise parallel, angesteuert, um eine effiziente Serienproduktion zu ermögliche, insbesondere unter ständiger Optimierung aufgrund der vorliegenden Simulationswerte des digitalen Zwillings.

Die cloudbasierte Service-Plattform 1 ist beispielsweise in einem Computersystem implementiert, welche ein Datenverarbeitungssystem ist, welches bevorzugt einen Datenbus aufweist, welcher zu einer Vielzahl von Prozessoren sowie ROM-Speicher und RAM-Speicher sowie nicht-flüchtige Speicher verbunden sein kann. Der eine oder die mehreren Mikroprozessoren könne eine oder mehrere CPUs oder ähnliches umfassen. Der Mikroprozessor kann beispielsweise Instruktionen aus dem Speicher erhalten und die Instruktionen ausführen, um eine der erwünschten Operationen durchzuführen. Der Datenbus verbindet diese Komponenten.

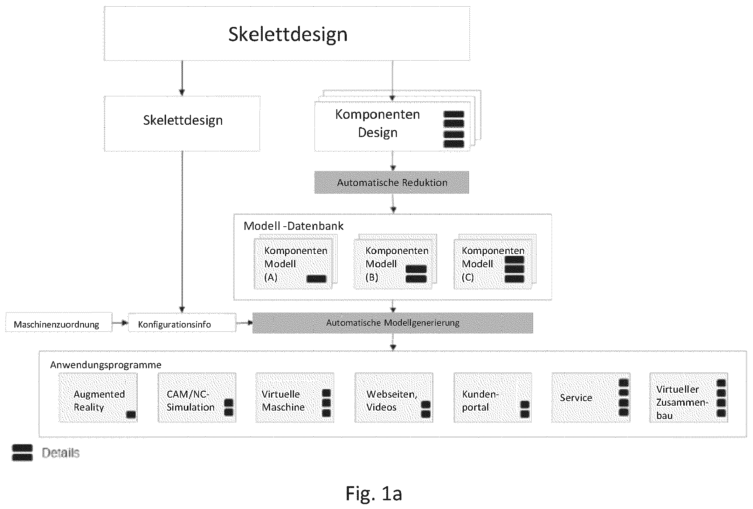

Der grundlegende Aufbau der cloudbasierten Service-Plattform 1 besteht in der Unterteilung zwischen einer Frontend-Schicht FS und einer Backend-Schicht BS. Die Frontend-Schicht kommuniziert mit der Backend-Schicht in einer Ausführung lediglich über genau vorbestimmte Kommunikationspunkte. Bevorzugt können die Schichten unabhängig voneinander angepasst oder verändert werden. Wie in Fig. 2 dargestellt, ist ein Modell-Generatormodul M1 vorgesehen, welches dazu dient, einen digitalen Zwilling basierend auf einer internen zentralen Datenbank sowie einer externen Initialanweisung zu erstellen. Das Modell-Generatormodul M1 kann beispielsweise einen eigenen Prozessor umfassen, welcher mit einer zentralen Datenbank und/oder einer Modell-Datenbank verbunden ist und beispielsweise die in Fig. 1a dargestellte automatische Modellgenerierung nach Erhalt der Initialanweisung ausführt.

Das Modell-Generatormodul M1 kann basierend auf der Initialanweisung sowie der darin enthaltenen Daten, insbesondere des Datensatzes bezüglich der Konfigurationsinformationen und/oder der Anwendungsfälle ein individualisiertes digitales Zwillingsmodell einer Werkzeugmaschine erstellen, wobei das Modell-Generatormodul M1 zusätzlich auch Zugriff auf Datensätze hat, welche direkt aus Messungen und Analysen an einer realen Werkzeugmaschine hervorgehen. Der erstellte digitale Zwilling oder individuelle digitale Zwilling wird im in Fig. 2 dargestellten digitalen Zwilling verarbeitet und/oder gespeichert. Der digitale Zwilling M2 erlaubt in einer besonders vorteilhaften Weiterentwicklung ein separates Speichern des digitalen Zwillings als Master-Modell in einem separat vorgesehenen Speicherabschnitt der Service-Plattform. Bei der ersten Erstellung eines individuellen digitalen Zwillings durch das Modell-Generatormodul M1 wird der individuelle digitale Zwilling erstellt und an den digitalen Zwilling M2 weitergegeben.

Der digitale Zwilling M2 ist in Interaktion beispielsweise mit einer Anwendungs-Engine A1, welche über den Zugriff auf den erstellten digitalen Zwilling sowie durch den Zugriff auf Echtzeitdaten aus einer Echtzeit-Datenbank DB1 sowie aufgrund des Zugriffs auf eine digitale Zwillings-Master-Datenbank DB2 eine Simulation unter Verwendung des digitalen Zwillings M2 zu ermöglichen. Die Echtzeit-Datenbank als auch die digitale Zwillings-Master-Datenbank können in einer bevorzugten Weiterbildung als eine einzige zentrale Datenbank integriert sein. Die Anwendungs-Engine A1 kann beispielsweise abhängig von den Anwendungen eine Analyse oder Simulation unter Verwendung des digitalen Zwillings durchführen.

Die spezifischen Anwendungen, wie beispielsweise Simulation, Training, etc., wie in Fig. 2 dargestellt, können direkt an einem Client-Terminal gehostet werden und über die Service-Plattform 1 wird ein Zugriff auf die Anwendungs-Engine A1 und den digitalen Zwilling M2 ermöglicht, um entsprechende Ausgabedaten, wie beispielsweise eine Simulation basierend auf dem digitalen Zwilling zu erzeugen und an die Clients auszugeben. Der digitale Zwilling M2 verarbeitet und speichert dabei nicht nur das Master-Modell, sondern bevorzugt auch sämtliche Slave-Modelle, so dass ein Zugriff der Anwendungs-Engine A1 auf sämtliche der vorliegenden Modelle möglich ist. Sowohl das Modellgenerator-Modul M1 der zugehörigen Speicher- und Datenbanken als auch der digitale Zwilling M2 liegen in der Backend-Schicht und somit getrennt von den Modulen der Frontend-Schicht und der Client-Seite der Server-Plattform.

Serverseitig in der Backend-Schicht ist zudem die Kooperations-Engine K1 vorgesehen, welche primär dazu benötigt wird, um einen koordinierten Zugriff und/oder Änderung der Modelle durch die Client-Terminals zu steuern. Somit kann dadurch einerseits die Zulässigkeit der Kooperationsanfragen geklärt werden und andererseits kann auch der Datenfluss gesteuert werden, wobei besonders bevorzugt der digitale Zwilling M2 als Steuerung der Kooperations-Engine K1 fungiert, um beispielsweise abhängig von den vorliegenden Anfragen sowie bereits erstellten Modellen die Kooperationsanfragen optimiert zu steuern. Die Kooperations-Engine K1 steuert somit grundsätzlich den Zugriff der unterschiedlichen Clients auf den erstellten digitalen Zwilling und insbesondere der digitale Zwilling M2.

In einem Fall, in dem drei Clients auf dasselbe Slave-Modell zugreifen möchten, um beispielsweise gemeinsam eine Simulation und/oder Anpassung einer Werkzeugmaschinenkomponente und/oder eines Werkzeugmaschinenbearbeitungsprozesses durchzuführen, muss zunächst über die Kooperations-Engine K1 der Zugriff auf das eine Slave-Modell hergestellt werden. In einem Beispiel werden dazu jeweils eindeutige Kennwerte kreiert, welche den drei Clients einzeln und entsprechend zugeordnet und mitgeteilt werden. Diese Werte werden auch als Identifizierungswert bezeichnet, sind eindeutig und nicht duplizierbar lediglich für einen Client gültig. Da jede der drei Clients einen eigenen Identifizierungswert erhält, ist für den weiteren Prozess die Möglichkeit gegeben, dass jeder der einzelnen Clients Zugriff auf das Slave-Modell erhält unter Angabe des jeweiligen Identifizierungswertes, um daher den Zugriff bzw. die Änderung überhaupt erst zu ermöglichen. Zusätzlich gibt es optional die Möglichkeit, vorbestimmte Ausgabedaten sämtlicher Clients auf Anfrage zur Verfügung zu stellen.

Zusätzlich ist in Fig. 2 ein Anpassungs-Modul M3 dargestellt, welches vorteilhaft der Frontend-Schicht FS zugeordnet ist. In einer Weiterbildung ist das Anpassungs-Modul jedoch auch in der Backend-Schicht BS angeordnet, um eine entsprechende Trennung zwischen Frondend und Backend zu erreichen. Über das Anpassungs-Modul besteht die Möglichkeit, den erstellten digitalen Zwilling M2 durch Eingabe eines Datensatzes zu ändern oder anzupassen oder zusätzliche Slave-Modelle zu erstellen. In einer bevorzugten Weiterbildung kann das Anpassungsmodul zumindest zwei unterschiedliche Datenkanäle haben, um mit dem digitalen Zwilling M2 zu kommunizieren. Beispielsweise kann ein primärer Kommunikationskanal vorgesehen sein zum Kreieren eines oder mehrerer neuer Slave-Modelle basierend auf vorgegebene Konfigurationsinformationen und/oder vorgegebenen Anwendungsfällen. Über sekundäre Kommunikationskanäle können beispielsweise Simulationen der Slave-Modelle abgerufen werden, insbesondere durch Interaktion zwischen digitalem Zwilling M2 und Anwendungs-Engine A1. Wie in Fig. 2 dargestellt, kann über die Anwendungsfall- und Konfigurationseingabe über die Frontend-Schicht das Modellgenerator-Modul M1 der Backend-Schicht BS aktiviert werden, um einen entsprechend individuellen digitalen Zwilling und das entsprechende Master-Modell MM erstellen zu können.

In Fig. 1a ist ein optimaler Prozess des Modellgenerator-Moduls M1 der cloudbasierten Service-Plattform 1 dargestellt. Nach entsprechendem Empfang der Initialanweisung der cloudbasierten Service-Plattform 1 und internen Verarbeitung kann das Modellgenerator-Modul M1 aktiviert werden, sodass der Prozess gemäß Fig. 1a durchgeführt wird. Das Modellgenerator-Modul M1 hat Zugriff auf die zentrale Datenbank, welche beispielsweise sämtliche Komponenten von sämtlichen Werkzeugmaschinen, die verfügbar sind, umfasst, sowie die entsprechenden gemessenen Echtzeitdaten, Strukturdaten, Steuerdaten und Messdaten. Basierend auf der Initialanweisung können einzelne Objektkomponenten über ein Objektkomponentendesign-Modul ausgewählt werden, um diese in weitere Folge zur individuellen Werkzeugmaschine und daher zum individualisierten digitalen Zwillings-Modell der ausgewählten Werkzeugmaschine zusammenzufügen. Die Ausgangsobjekte des Komponentendesigns umfassen äußerst umfangreiche und detaillierte Objektkomponenten der einzelnen Komponenten der Werkzeugmaschine gemäß den in der Datenbank abgespeicherten Datensätzen. Abhängig von der Initialanweisung und insbesondere dem darin enthaltenen Datensatz, welcher die Konfigurationsinformation der ausgewählten Werkzeugmaschine umfasst, sowie zumeist einen oder mehrere Anwendungsfälle für die Simulation oder für den Einsatz der Werkzeugmaschine kann eine automatische Reduktion der sehr großen Ausgangskomponenten durchgeführt werden, um diese optimal an die Initialanweisung anzupassen.

Somit werden zunächst auswählbare und kombinierbare Objektkomponenten selektiert, um diese anschließend automatisch komponenten- und anwendungsspezifisch zu reduzieren und dies besonders bevorzugt automatisch in der Backend-Schicht und unabhängig von weiteren Prozessen in der Frontend-Schicht.

Nachfolgend kann vorteilhaft eine Modell-Datenbank basierend auf den reduzierten Komponenten erstellt werden, wobei diese Modell-Datenbank insbesondere einem getrennten Speicherabschnitt zugeordnet sein kann, um einen schnellen Zugriff zu ermöglichen. Die Komponenten könnten nach Performance-Anforderungen sortiert werden, beispielsweise nach unterschiedlichem Detailierungsgrad.

Basierend auf diesen Daten kann die automatische Modellgenerierung durchgeführt werden, welche insbesondere basierend auf vorgegebenen Kombinationsregeln aus den Konfigurationsinformationen und dem Skelettdesign den digitalen Zwilling der Werkzeugmaschine basierend auf den reduzierten Objektkomponenten erstellt. Zudem kann eine Maschinenzuordnung durchgeführt werden. Nach der automatischen Modellgenerierung des digitalen Zwillings bzw. des individuellen digitalen Zwillings kann dieser für verschiedene Anwendungsprogramme herangezogen werden, wobei je nach Detaillierungsgrad besonders vorteilhaft verschiedene Komponenten des digitalen Zwillings anwendungsspezifisch angesteuert werden können. Da der digitale Zwilling beispielsweise ein physikalisches Modell umfasst, wie auch ein CAD-Modell, ein Modell der Steuerungssysteme, ein thermisches Modell, ein Modell der Betriebsmittel, kann je nach Anwendungsprogramm ein Teil der verfügbaren Modelle des digitalen Zwillings entsprechend verwendet und daher Speicher und Rechenkapazität optimal genutzt werden.

Beispielsweise kann für ein Anwendungsprogramm der virtuellen Realität, Augmented Reality, in einem Anwendungsfall der Zugriff auf eine graphische Darstellung, beispielsweise basierend auf einem CAD-Modell des digitalen Zwillings ausreichen, so dass nur dieser Datensatz den Anwendungsprogrammen entsprechend ausgegeben wird. Die Simulation des Bearbeitungsprozesses hingegen kann beispielsweise bereits sowohl das graphische Modell als auch ein physikalisches Modell der Werkzeugmaschine und/oder des Werkstücks benötigen, so dass der digitale Zwilling entsprechende Modellabschnitte freigibt, um eine Ausgabe für das NC-Simulationsanwendungsprogramm auszugeben.

Wird beispielsweise ein Anwendungsprogramm als virtuelle Maschine betrieben, beispielsweise in direkter Verbindung mit einer realen Werkzeugmaschine, so kann ein erhöhter Detaillierungsgrad nötigsein, so dass mehrere Abschnitte des digitalen Zwillings entsprechend freigegeben werden als Ausgabe an das entsprechende Anwendungsprogramm und den verbundenen Client, welcher beispielsweise die reelle Werkzeugmaschine ist. Der digitale Zwilling hat daher die Möglichkeit, beispielsweise Steuerparameter zu generieren und über die virtuelle Maschine und/oder einen Client-Terminal an die reelle Werkzeugmaschine auszugeben und zu verifizieren, um dadurch beispielsweise einen reellen Produktionsprozess zu steuern und/oder zu optimieren.

Ein weiteres Anwendungsprogramm kann beispielsweise eine Interaktion über eine Webseite sein, um beispielsweise Videos oder Darstellungen der individuellen Werkzeugmaschine anzuzeigen. Je nach Anforderungsprofil des Anwendungsprogramms werden entsprechende Teile des virtuellen Modells bereitgestellt.

Ein weiteres Anwendungsprogramm kann beispielsweise ein Kundenportal sein, das beispielsweise ein Kunde einer reellen Werkzeugmaschine bedient. Über ein Kundenportalanwendungsprogramm ist es möglich, dem Besitzer der reellen Werkzeugmaschine Zugriff auf einen digitalen Zwilling seiner Werkzeugmaschine zu ermöglichen entsprechend dem erforderlichen Detaillierungsgrad. Ein weiteres Anwendungsprogramm ist beispielsweise ein Service-Anwendungsprogramm, mit dem ein Werkzeugmaschinenhersteller über ein Client-Terminal detaillierten Zugriff auf einen digitalen Zwilling erhält, um beispielsweise den Service oder die Wartung an einer reellen Werkzeugmaschine zu begleiten und/oder zu steuern. Letztlich ist ein weiteres Anwendungsprogramm der virtuelle Zusammenbau, bei dem über einen sehr detaillierten Zwilling der Zusammenbau einer individuellen Werkzeugmaschine simuliert, entsprechend optimiert und ausgegeben werden kann. All dies ist möglich über den Fernzugriff mittels unterschiedlicher Client-Terminals bei gleichzeitiger Darstellungsmöglichkeit der Ausgabedaten an verschiedenen Client-Terminals.

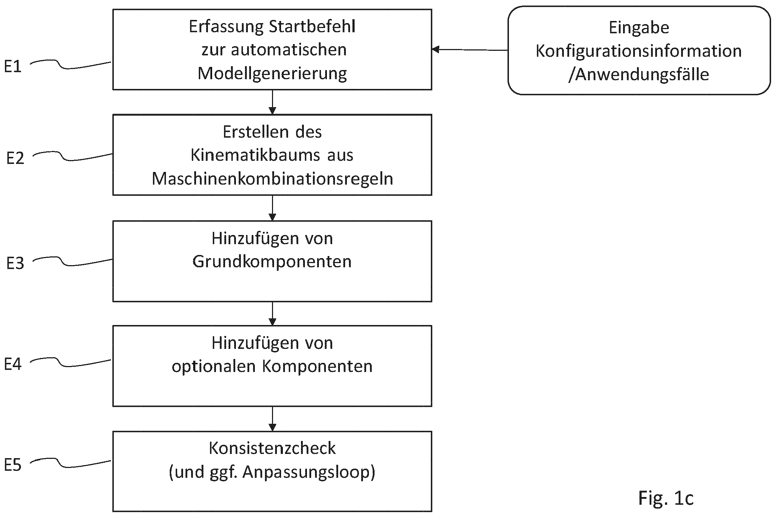

In Fig. 1c ist ein Ablauf-Diagramm des Modellerstellungsprozesses symbolisch dargestellt.

Ausgehend von der Initialanweisung mit dem Initialdatensatz, welcher Konfigurationsinformationen sowie einen oder mehrere Anwendungsfälle umfasst, triggert die Initialanweisung einen Startbefehl zur automatischen Modellgenerierung, was zu einem Einlesen des Datensatzes der Initialanweisung führt, E1.

Im nächsten Schritt, E2, wird der Kinematikbaum des virtuellen Werkzeugmaschinenmodells erstellt. Durch vorgegebene Maschinenkombinationsregeln werden Objektkomponenten an vorgegebenen Knotenpunkten kombinierbar, so dass abhängig von der Konfigurationsinformation sowie dem Anwendungsfalls ein Kinematikbaum erstellt wird, der erlaubt, verschiedene Objektkomponenten zu einem funktionierenden digitalen Zwilling der ausgewählten Werkzeugmaschine zu kombinieren.

Basierend auf dem Kinematikbaum wird im nächsten Schritt E3, ein Hinzufügen der Objektkomponenten durchgeführt. Diese Objektkomponenten im ersten Schritt umfassen die Grundkomponenten, also insbesondere die Basiskomponenten der ausgewählten Werkzeugmaschine. Im folgenden Schritt E4 wird zur erstellten Kombination der Grundkomponenten ein Hinzufügen optionaler Komponenten durchgeführt entsprechend der Konfigurationsinformationen und den eingegebenen Anwendungsfall. Letztlich wird in Schritt E5 ein Konsistenz-Check durchgeführt, wobei gegebenenfalls in einer Weiterbildung ein Anpassungsiterationsschritt vorgesehen ist, welcher ein Anpassen der optionalen Komponenten vorsieht zur Bewältigung eines möglicherweise vorliegenden Konflikts, der beim Konsistenz-Check ermittelt wurde. Nach Durchlauf dieses automatischen Modell-Erstellungsprozesses liegt am Ende ein individueller digitaler Zwilling vor.

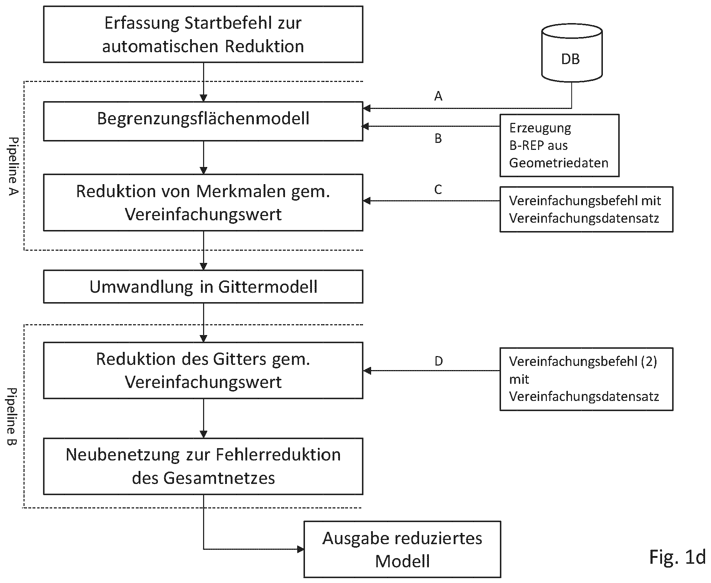

In Fig. 1d ist eine schematische Detaildarstellung der automatischen Reduktion dargestellt. Ausgehend von der Erfassung des Startbefehls für die automatische Reduktion wird diese gestartet. In einer besonders vorteilhaften Ausführungsform wird in einer ersten Software-Pipeline A ein Bearbeitungsvorgang des Begrenzungsflächenmodells sowie die Reduktion von Merkmalen gemäß einem Vereinfachungsbefehl durchgeführt. Die überlappende Ausführung in der bevorzugten Ausführungsform führt zu einer erhöhten Effizienz bei der Erstellung des reduzierten Modells. Zunächst wird für den ersten Schritt des Bearbeitens des Begrenzungsflächenmodells dieses vollständig bzw. sukzessive aus einer Datenbank geladen, gemäß der Variante A. Für Variante B wird das Begrenzungsflächenmodell im ersten Schritt zunächst erzeugt, und zwar aus vorliegenden Geometriedaten, welche aus der Datenbank geladen werden können. Dies ist als Variante B in Fig. 1d dargestellt. Somit sorgt der erste Schritt der Pipeline A dafür, dass ein entsprechendes Begrenzungsflächenmodell vorliegt.

Darauffolgend erfolgt die Reduktion von Merkmalen anhand dieses Begrenzungsflächenmodells. Besonders vorteilhaft findet diese Reduktion von Merkmalen in Abhängigkeit eines Vereinfachungswerts statt. Der Vereinfachungswert kann beispielsweise über einen Vereinfachungsbefehl, der einen Vereinfachungsdatensatz aufweist, ermittelt werden. Besonders vorteilhaft wird der Vereinfachungswert automatisch aus der Initialanweisung ermittelt, insbesondere aus den Konfigurationsinformationen und dem vorgegebenen Anwendungsfall bzw. den vorgegebenen Anwendungsfällen. Mit anderen Worten, je komplizierter und aufwändiger die angeforderte Werkzeugmaschine und die Anwendungsfälle sind, desto niedriger wird der Vereinfachungswert, wohingegen bei einfachen Anforderungen, der Vereinfachungswert eine hohe Zahl annehmen kann, so dass die Reduktion von Merkmalen zu einem großen Ausmaß vorgenommen werden kann, so dass das Modell stark reduziert werden kann. Der Output der Pipeline A wird nach abschließender Reduktion im darauffolgenden Schritt in ein Gittermodell umgewandelt.

Bei der Reduktion der Merkmale gemäß dem vorgegebenen oder ermittelten Vereinfachungswert werden beispielsweise für ein CAD-Modell bestimmte Details gelöscht, wie beispielsweise Schrauben, Löcher, oder Maschinenelemente, welche einen bestimmten Größenwert einer räumlichen Ausdehnung unterschreiten und welche beispielsweise unbeweglich sind. Zudem können nicht sichtbare Teilkomponenten entfernt werden, beispielsweise der innere Aufbau einer Teilkomponente einer Hilfsspindel, wenn diese für den angeforderten Anwendungsfall nicht relevant sind und entsprechend dem automatisch ermittelten Vereinfachungswert somit gelöscht werden können. Das reduzierte Begrenzungsflächenmodell kann in ein Gittermodell umgewandelt werden und/oder mit einem Gittermodell kombiniert werden.

In einem weiteren Prozessschritt ist eine besonders bevorzugte zweite Pipeline B vorgesehen, welche initial eine Reduktion des Gitters gemäß einem Vereinfachungswert, welcher gleich oder unterschiedlich zum Vereinfachungswert für das Begrenzungsflächenmodell vorgegeben werden kann. Auch dieser zweite Vereinfachungswert kann bevorzugt automatisch über einen Vereinfachungsbefehl ermittelt werden oder sich direkt aus der Initialanweisung ergeben. Auch bei der Reduktion des Gitters können daher gemäß Vereinfachungswert bestimmte Details oder Detailabschnitte sowie Teilobjekte simplifiziert werden, um eine Beschränkung des Gittermodells auf die für die Konfigurationsinformationen und die Anwendungsfälle relevanten Objektdetails zu reduzieren und ein entsprechend reduziertes Modell erhalten zu können. Als zweiten Schritt der Pipeline B erfolgt besonders bevorzugt eine Neubenetzung des Modells zur Fehlerreduktion des Gesamtnetzes. Diese Neubenetzung kann das gesamte Modell oder bestimmte Teilabschnitte betreffen, so dass obwohl eine Reduktion des Gitternetzes vorgenommen wurde, eine optimale Neubenetzung zur Fehlerreduktion des Gesamtnetzes erreicht werden kann.

Als Ausgabe der automatischen Reduktion wird ein reduziertes Modell ausgegeben, und zwar insbesondere eine reduzierte Objektkomponente, welche in der Modell-Datenbank abgelegt werden kann. Aufgrund dieser reduzierten Objektkomponenten kann im darauffolgenden Schritt die automatische Modellgenerierung durchgeführt werden, so dass der digitale Zwilling erstellt werden kann. Die Verwendung der Pipelines ist zwar vorteilhaft, aber in einer weiteren Ausführung ist auch eine Implementierung ohne Pipelines möglich.

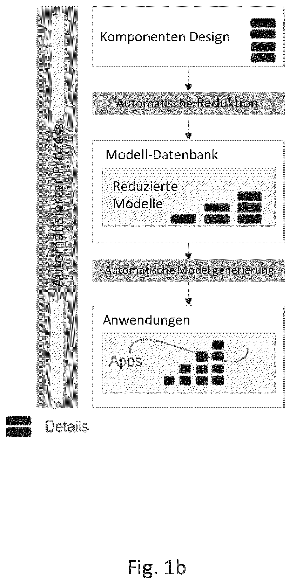

In Fig. 1b ist schematisch nochmals der ideale Modellerstellungsprozess dargestellt, wobei ausgehend von dem komplexen Komponenten-Design die beschriebene automatische Reduktion durchgeführt wird. Die Ausgabe der automatischen Reduktion ergibt die reduzierten Objektdatensätze, welche in der Modell-Datenbank abgelegt werden können. Basierend auf den Daten der Modell-Datenbank und dem reduzierten Objektkomponenten kann eine automatische Modellgenerierung durchgeführt werden, um den digitalen Zwilling zu erzeugen und entsprechenden Anwendungen bereitzustellen.

Auf diese Weise kann beispielsweise ein Master-Modell des individuellen digitalen Zwillings erzeugt werden. Ausgehend vom Master-Modell können durch entsprechende Ableitung ein oder mehrere Slave-Modelle erstellt werden, welche weiter reduziert auf nur einzelne Anwendungsfälle beispielsweise beschränkt sind und mithin noch geringere Daten und Rechenleistung für die Simulation erfordern.

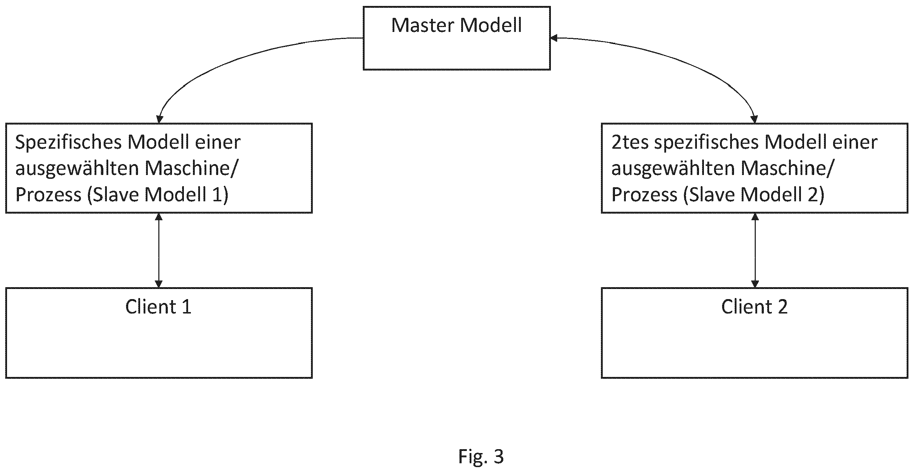

Wie in Fig. 3 dargestellt, kann in einer bevorzugten Ausführungsform das Master-Modell als grundlegendes virtuelles Abbild der ausgewählten Werkzeugmaschine als digitaler Zwilling erzeugt sein. Ausgehend vom Master-Modell ist es möglich, dass Clients Modell-Ableitungen anfordern, welche zu Slave-Modellen führen, die wiederum für Simulationsanfragen verwendet werden können. Aus dem Master-Modell können somit spezifische Modelle einer spezifischen Maschine bzw. eines Prozesses erzeugt werden, als Slave-Modell. Das Slave-Modell (SM1, SM2, SM3) kann in direkter Interaktion mit einem Client stehen, so dass dieser beispielsweise Simulationen am Slave-Modell durchführen kann oder dieses anpassen kann. Aus dem Master-Modell können eine Vielzahl von verschiedener Slave-Modelle für unterschiedliche Maschinenabschnitte oder Prozesse abgeleitet werden, welche unterschiedlichen Clients bereitgestellt werden können.

Weiter bevorzugt kann ein Anpassungsmodul vorgesehen sein, welches eine Anpassung des Master-Modells in der Backend-Schicht BS ermöglicht. Vorausgesetzt entsprechende Berechtigungen liegen vor, kann ein Client mit der Eingabe einer Änderungsanfrage Änderungsbedingungen am Master-Modell MM eingeben. Grundsätzlich werden Änderungen am Master-Modell jedoch nicht direkt am Master-Modell ausgeführt, sondern zunächst auf einem Slave-Modell, welches die Änderungsanfrage je nach Zulässigkeit und/oder Resultat der Änderung am Slave-Modell an das Master-Modell weitergibt, um dort eine Änderung zu bewirken. Das Master-Modell wiederum kann abhängig von der vorliegenden Änderungsanfrage sowie dem Verhalten des angepassten Slave-Modells die Änderungsanfrage zurückweisen. Eine Änderungsanfrage wird somit zunächst an einem Slave-Modell direkt ausgeführt, um erst nachfolgend eine Auswirkung auf das Master-Modell erzeugen zu können, nach entsprechender Prüfung. Diese Anordnung erlaubt eine effiziente und vor allem datensichere Integration des Master-Modells in die Mehrbenutzerumgebung.

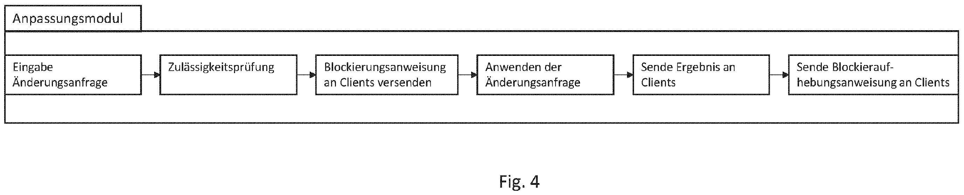

Wie in Fig. 4 dargestellt, erfolgt nach der Eingabe der Änderungsanfrage zunächst eine automatische Zulässigkeitsprüfung der Änderungsanfrage. Die Zulässigkeitsprüfung umfasst einerseits die Prüfung der entsprechenden Berechtigung des anfragenden Clients als auch eine Prüfung der Zulässigkeit der Änderungsdaten der Änderungsanfrage. Bestimmte Änderungsbefehle können daher backendseitig durch die automatische Zulässigkeitsprüfung ausgeschlossen werden.

Im darauffolgenden Schritt kann das Anpassungsmodul eine Blockieranweisung an Clients versenden, um einen Konflikt mit mehreren gleichzeitig auftretenden Änderungsanfragen oder Simulationsanfragen zu vermeiden. Besonders vorteilhaft kann das Anpassungsmodul dabei als Teilabschnitt der Kooperations-Engine K1 ausgestaltet sein.

Nachdem die Blockieranweisung an den Client erfolgreich versendet wurde und dies vorteilhaft bestätigt wurde, kann die Änderungsanfrage in der Simulationsumgebung auf die Modelle angewendet werden, entsprechend der oben beschriebenen Änderungsimplementierungsstrategie. Nach Abschluss der Änderungsanfrage kann das Ergebnis an die verbundenen oder alle Clients versendet werden. Nach dem Versenden kann das Anpassungsmodul eine Blockieraufhebungsanweisung an die Clients versenden, um zu signalisieren, dass weitere Änderungsanfragen und/oder Simulationsanfragen nun wieder möglich sind. Somit wird eine effiziente Anpassung auf sichere Weise gewährleistet.

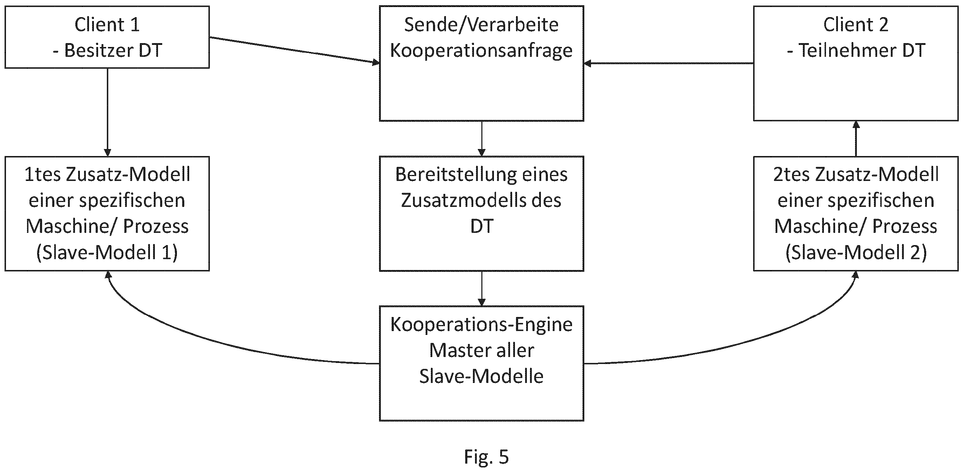

In Fig. 5 ist das Senden einer Kooperationsanfrage zweier Clients, welche sich ein Slave-Modell teilen wollen, dargestellt. Beispielsweise ist Client 1 als Besitzer des individuellen digitalen Zwillings vorgesehen, da dieser beispielsweise die Initialanweisung ausgegeben hat, um den digitalen Zwilling zu erstellen. Obwohl dieser Client als Besitzer des individuellen digitalen Zwillings klassifiziert ist, hat dieser auch lediglich Zugriff auf ein entsprechendes Slave-Modell des digitalen Zwillings, da vorteilhafterweise das Master-Modell stets im Hintergrund bleibt. Der erste Client kann zudem auch vorteilhaft ein weiteres Slave-Modell zugewiesen haben. Möchte nun der zweite Client am individuellen digitalen Zwillings-Modell teilnehmen, so kann über eine Kooperationsanfrage über die Kooperations-Engine K1 eine Kooperation des ersten Clients mit dem zweiten Client erreicht werden. Beispielsweise kann ein Zusatzmodell des individuellen digitalen Zwillings bereitgestellt werden als eigenes Slave-Modell. Dieses Zusatzmodell kann sowohl dem ersten Client als auch dem zweiten Client bereitgestellt werden, wobei stets die Kooperations-Engine Master aller Slave-Modelle bleibt und daher den Zugriff, die Änderung und das Löschen der Modelle koordiniert. Gleichzeitig ist es auch möglich, dass im Rahmen der Kooperation verschieden stark reduzierte Modelle für den ersten Client und den zweiten Client verwendet werden, so dass ein erstes Zusatzmodell und ein zweites Zusatzmodell des spezifischen Prozesses oder der spezifischen Maschine vorliegt. Der Detaillierungsgrad kann wiederum abhängig vom Anwendungsfall automatisch vorgegeben werden (über den Vereinfachungsbefehl der auch aus einer Client-Anfrage ermittelt werden kann, zur Erstellung des reduzierten Slave-Modells). In einer Weiterentwicklung kann nach Beendigung der Kooperation das Zusatzmodell (Slave-Modell) wieder gelöscht werden, wobei besonders vorteilhaft die Simulationsdaten nach wie vor in einer Datenbank abgespeichert sind.

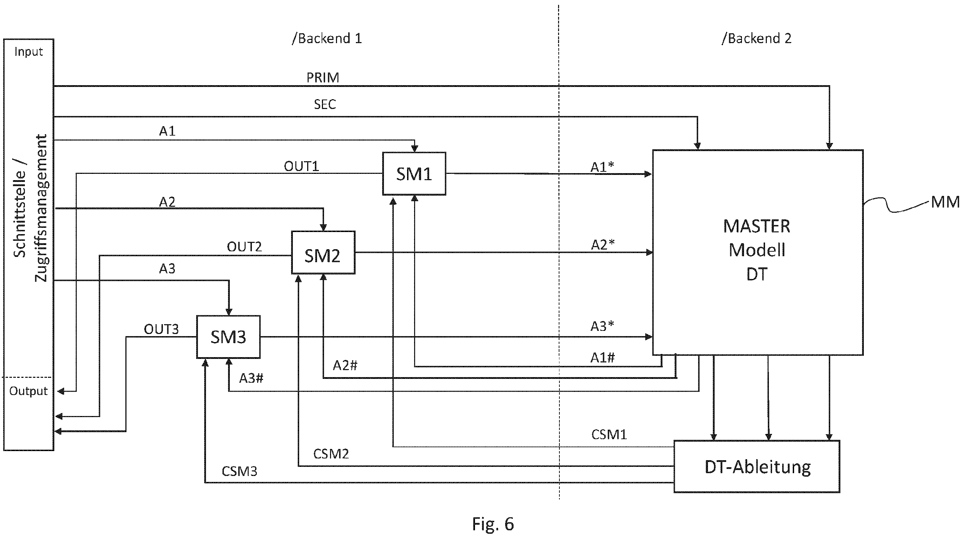

Fig. 6 ist eine beispielhafte Weiterentwicklung der vorliegenden Erfindung. Die Backend-Schicht BS wird in eine erste Backend-Schicht und eine zweite Backend-Schicht (Core) aufgeteilt. In der Backend-Schicht 2 liegt das Master-Modell MM des individuellen digitalen Zwillings vor, welches über die direkten Kommunikationskanäle PRIM und SEC Master-Befehle erhalten kann, welche nur einem beschränkten Client Zugriff erlauben. Über diese Top-Level-Befehlskanäle können beispielsweise neue Slave-Modelle erzeugt werden, sowie eine Erstellung eines Master-Modells MM getriggert werden.

Wie in Fig. 6 dargestellt, sind aus dem Master-Modell MM des individuellen digitalen Zwillings drei Slave-Modelle abgeleitet, SM1, SM2 und SM3. Zur Erstellung eines Slave-Modells kann beispielsweise eine entsprechende Anfrage über den SEC-Kanal an das Master-Modell MM gestellt werden, wobei dieses wiederum über das Ableitungsmodul einen Erstellbefehl generiert zum Erstellen eines Slave-Modells. Über eine Client-Anfrage kann ein Slave-Modell als reduziertes virtuelles Modell der ausgewählten WZM erstellt werden, unter Verwendung des Master-Modells, wobei sich der Vereinfachungsgrad bevorzugt automatisch aus dem Datensatz der Client-Anfrage ergibt. Create Slave Modell-Befehle sind exemplarisch als CSM1, CSM2 und CSM3 in Fig. 6 dargestellt.

Vorteilhaft sind die Slave-Modelle in der Backend-Schicht 1 verortet und somit in einer anderen Schicht als das Master-Modell. Die Interaktion der Clients mit den erstellten Slave-Modellen SM1, SM2 und SM3 kann über die allgemeinen Kanäle A1, A2 und A3 erreicht werden. Beispielsweise können über diese Kanäle Simulationsabläufe, Änderungsbefehle, Löschbefehle direkt in das Slave-Modell eingegeben werden. Wird beispielsweise ein Änderungsbefehl am Slave-Modell 1 eingegeben, so wird diese Änderung am Slave-Modell 1 direkt umgesetzt. Der Änderungsbefehl wird weiterhin vom Slave-Modell 1 über die Änderungsweitergabeschnittstelle A1* an das Master-Modell weitergegeben, wobei eine Zulässigkeitsprüfung durchgeführt wird. Das Akzeptieren oder Abweisen der Änderung wird vom Master-Modell über den Rückmeldungskanal A1# an das jeweilige Slave-Modell zurückgegeben, um beispielsweise die Änderung rückgängig zu machen oder die Änderung zu bestätigen.

Ausgaben, beispielsweise der Simulationen der Darstellungen und Prozesse der Slave-Modelle werden über eigene Ausgabekanäle OUT1, OUT2, OUT3 an die Schnittstelle zurückgegeben und über die Schnittstelle und das Zugriffsmanagement den einzelnen Clients zugeordnet und/oder allen Clients bereitgestellt. Abhängig von den jeweiligen Identifikationskennwerten kann das Zugriffmanagement die Ausgabedaten einem oder mehreren vorbestimmten Clients ausgeben.

Vorliegende Merkmale, Komponenten und spezifische Details können ausgetauscht und/oder kombiniert werden um weitere Ausführungsformen zu erstellen, in Abhängigkeit des geforderten Verwendungszwecks. Etwaige Modifikationen die im Bereich des Wissens des Fachmanns liegen, werden mit der vorliegenden Beschreibung implizit offenbart.

## Patentansprüche

1. Computerimplementiertes Verfahren zur Verarbeitung eines digitalen Zwillings einer Werkzeugmaschine in einer Mehrbenutzerumgebung unter Verwendung einer, mit mehreren Clients (C) verbindbaren, zentralen Verarbeitungsplattform welche eine cloudbasierte Serviceplattform (1) ist und eine Frontend-Schicht (FS) und eine Backend-Schicht (BS) aufweist, das Verfahren umfasst die Schritte:
in der Backend-Schicht (BS), Erstellen eines digitalen Zwillings einer ausgewählten Werkzeugmaschine nach Empfang einer Initialanweisung eines ersten Clients (C) über die Frontend-Schicht (FS) oder die Backend-Schicht (BS), wobei die Initialanweisung zumindest Konfigurationsinformation der ausgewählten Werkzeugmaschine umfasst und der digitale Zwilling zumindest basierend auf der Konfigurationsinformation erstellt wird;
Übertragen von Ausgabedaten des erstellten digitalen Zwillings an einen oder mehrere Clients (C) über die Frontend-Schicht (FS), insbesondere zum Visualisieren des erstellten digitalen Zwillings auf zumindest einem Client-Terminal.

2. Computerimplementiertes Verfahren nach Anspruch 1, mit dem Schritt,
Anwenden eines oder mehrerer Simulationsparameter auf den erstellten digitalen Zwilling, der ein virtuelles Modell ist, das insbesondere physikalische Eigenschaften einer realen Werkzeugmaschine entsprechend der ausgewählten Werkzeugmaschine, Werkzeugmaschinenkomponenten, Betriebsmittel, des Bearbeitungsprozesses und/oder des umliegenden Automationssystems simuliert; und
wobei der eine oder die mehreren Simulationsparameter bewirken, dass das virtuelle Modell eine Ausgabe erzeugt, die das Verhalten der ausgewählten Werkzeugmaschine als Reaktion auf den einen oder die mehreren Simulationsparameter simuliert.

3. Computerimplementiertes Verfahren nach zumindest einem der vorhergehenden Ansprüche, wobei die ausgewählte Werkzeugmaschine eine clientseitig individualisierte Werkzeugmaschine ist und die Konfigurationsinformation und/oder der spezifische Anwendungsfall die Konfiguration des erstellten digitalen Zwillings und die Simulationsbedingungen festlegt.

4. Computerimplementiertes Verfahren nach zumindest einem der vorhergehenden Ansprüche, wobei der Schritt Erstellen des digitalen Zwillings umfasst:
basierend auf der empfangenen Initialanweisung, Auswahl von Objektkomponenten des zu erstellenden digitalen Zwillings aus einer zentralen Datenbank (DB1, DB2), bevorzugt unter Zuordnung gemessener Echtzeitdaten realer Werkzeugmaschinenkomponenten und/oder unter Zuordnung einer technologischen Hierarchie, wobei die Objektkomponenten insbesondere virtuelle Werkzeugmaschinenkomponenten, Modellierungsbedingungen und Simulationsbedingungen umfassen.

5. Computerimplementiertes Verfahren nach zumindest einem der vorhergehenden Ansprüche, wobei der Schritt Erstellen des digitalen Zwillings umfasst:
Automatische Reduktion der ausgewählten Objektkomponenten zu reduzierten Objektkomponenten gemäß einem vorgegebenen Vereinfachungsgrad wobei bevorzugt der Vereinfachungsgrad automatisch aus dem Anwendungsfall und/oder der Konfigurationsinformation ermittelt wird.

6. Computerimplementiertes Verfahren nach zumindest einem der vorhergehenden Ansprüche, wobei die automatische Reduktion der ausgewählten Objektkomponenten einen Vereinfachungsgrad des Modells basierend auf der empfangenen Initialanweisung wählt und/oder wobei die automatische Reduktion die Detailgenauigkeit der Geometriedaten des Modells reduziert und das Polygonnetzes der ausgewählten Werkzeugmaschine bei der Gitternetzerzeugung grobmaschiger setzt.

7. Computerimplementiertes Verfahren nach zumindest einem der vorhergehenden Ansprüche, wobei der Schritt Erstellen des digitalen Zwillings umfasst:
automatische Erstellung eines Master-Modells (MM) des digitalen Zwillings durch Kombination der reduzierten Objektkomponenten gemäß vordefinierter, insbesondere serverseitig vordefinierter, Kombinationsregeln.

8. Computerimplementiertes Verfahren nach zumindest einem der vorhergehenden Ansprüche, wobei ein Master-Modell (MM) des erstellten digitalen Zwillings erstellt wird, unter Verwendung aller übermittelten Konfigurationsinformationen und Anwendungsfälle aller Clients (C) der ausgewählten Werkzeugmaschine und wobei bevorzugt, dass Master-Modell (MM) für die Clients (C) nicht sichtbar ist und die Ausgabe an die Clients (C) mittels vom Master-Modell (MM) abgeleiteten Slave-Modell (SM1, SM2, SM3) erzeugt wird, wobei bevorzugt ein Slave-Modell (SM1, SM2, SM3) einem Client (C) zugewiesen wird und das Slave-Modell (SM1, SM2, SM3) auf zumindest einen vorbestimmbaren Anwendungsfall reduziert ist.

9. Computerimplementiertes Verfahren nach zumindest einem der vorhergehenden Ansprüche, wobei der erstellte digitale Zwilling ein virtuelles Master-Modell (MM) der ausgewählten Werkzeugmaschine umfasst und das Verfahren die Schritte umfasst:
Anpassung des Master-Modells (MM) in der Backend-Schicht (BS) nach Empfang von Anpassungsbefehlen, welche bevorzugt durch Clients (C) über die Frontend-Schicht (FS) übermittelt werden, wobei die zentrale Verarbeitungsplattform (1) eine Kooperationseinheit (K1) umfasst, zum Koordinieren der Aktivitäten der Clients;
Speicherung des angepassten Master-Modells (MM) als Slave-Modell (SM1, SM2, SM3) und Zuweisung des Slave-Modells (SM1, SM2, SM3) an ein oder mehrere verbundene Clients (C) und bevorzugt Durchführen einer Simulation eines vorgegebenen Anwendungsfalls basierend auf dem Slave-Modell (SM1, SM2, SM3).

10. Computerimplementiertes Verfahren nach zumindest einem der vorhergehenden Ansprüche, wobei zur Änderung des Master-Modells in der Mehrbenutzerumgebung,
ein Client (C) über die Frontend-Schicht eine Änderungsanfrage zur Anpassung des Master-Modells (MM) an die Kooperationseinheit (K1) stellt, und wobei die Kooperationseinheit (K1) die folgenden Schritte ausführt:
Prüfen ob die Änderungsanfrage zulässig ist, zumindest durch Bestimmung ob die Änderungsanfrage von anderen Clients (C) blockiert wird und/oder ob der anfragende Client (C) die nötige Berechtigung umfasst, und
wenn die Änderungsanfrage zulässig ist, Blockieren des Zugriffs der Clients (C), bevorzugt durch Versenden einer Blockieranweisung an alle verbundenen Clients (C), und
im nachfolgenden Schritt, Anwenden der Änderungsanfrage auf das Master-Modell (MM) des erstellten digitalen Zwillings und darauffolgend bevorzugt Versenden einer Blockieraufhebungsanweisung an alle verbundenen Clients (C).

11. Computerimplementiertes Verfahren nach zumindest einem der vorhergehenden Ansprüche, wobei die Anwendung der Änderungsanfrage direkt an einem Slave-Modell (SM1, SM2, SM3) erfolgt, und bevorzugt sofort wirksam ist, und anschließend die Anwendung der Änderungsanfrage am Master-Modell (MM) erfolgt, insbesondere nach Prüfung und/oder Zulassung der Änderungsanfrage durch eine integrierte Änderungs-Prüfungseinheit.

12. Computerimplementiertes Verfahren nach zumindest einem der vorhergehenden Ansprüche, wobei das Master-Modell (MM) des erstellten digitalen Zwillings dem ersten Client (C) als Besitzer zugeordnet ist und die Serviceplattform (1) dem ersten Client (C) bevorzugt ein erstes Slave-Modell nach der Erstellung des Master-Modells (MM) bereitstellt und
wenn ein weiterer Client (C) über die Frontend-Schicht (FS) eine Kooperationsanfrage an die Kooperationseinheit (K1) stellt, um Zugriff auf den erstellten digitalen Zwilling zu erhalten, die Kooperationseinheit (K1) für den Zugriff auf den erstellten digitalen Zwilling ein Slave-Modell (SM1, SM2, SM3) des erstellten digitalen Zwillings bereitstellt.

13. Computerprogramm, umfassend Befehle die bei der Ausführung des Programms durch einen Computer diesen veranlassen, die Schritte des Verfahrens nach zumindest einem der vorhergehenden Ansprüche auszuführen.

14. Zentrale Verarbeitungsplattform mit einer Mehrbenutzerumgebung und zumindest einem digitalen Zwilling einer Werkzeugmaschine wobei die Verarbeitungsplattform eine cloudbasierte Serviceplattform (1) ist und eine Frontend-Schicht (FS) und eine Backend-Schicht (BS) aufweist, wobei die Verarbeitungsplattform konfiguriert ist zum:
in der Backend-Schicht (BS), Erstellen des digitalen Zwillings einer ausgewählten Werkzeugmaschine nach Empfang einer Initialanweisung eines ersten Clients (C) über die Frontend-Schicht (FS), wobei die Initialanweisung zumindest Konfigurationsinformation der ausgewählten Werkzeugmaschine umfasst und der digitale Zwilling zumindest basierend auf der Konfigurationsinformation erstellt wird;
Übertragen von Ausgabedaten des erstellten digitalen Zwillings an einen oder mehrere Clients (C) über die Frontend-Schicht (FS), insbesondere zum Visualisieren des erstellten digitalen Zwillings auf einem Client-Terminal.

15. Zentrale Verarbeitungsplattform nach dem vorhergehenden Anspruch wobei die Frontend-Schicht (FS) zur Verbindung mit einer Vielzahl von Client-Terminals eingerichtet ist und für den clientseitigen Zugriff über einen Browser die Nutzung von browserbasiertem Rendering bereitstellt und/oder für serverbasiertes Rendering und zum Streamen von Pixeln ein graphikfähiges Rendering bereitstellt und/oder ein natives Rendering in einer mit der cloudbasierten Serviceplattform (1)-verbundenen Client-Anwendung erlaubt.
